# EUROPÄISCHE PATENTSCHRIFT

(11) **EP 2 986 543 B1**
(45) Veröffentlichungstag und Bekanntmachung des Hinweises auf die Patenterteilung: **14.06.2017**
(21) Anmeldenummer: 14717759.6
(22) Anmeldetag: 15.04.2014
(51) Int. Cl.: B65G 47/31, B65G 47/68

(54) **PAKETVEREINZELUNG**
SORTING OF PACKAGES
SÉPARATION DE PAQUETS

(30) Priorität: 16.04.2013 DE 102013206790
(43) Veröffentlichungstag der Anmeldung: 24.02.2016
(73) Patentinhaber: Deutsche Post AG, 53113 Bonn (DE); TRANSNORM SYSTEM GmbH, 31177 Harsum (DE)
(72) Erfinder: WALTER, Detlef, 30855 Langenhagen (DE); DIOP, Sidy, 31141Hildesheim (DE); KRAEMER, Arnd, 31141 Hildesheim (DE); VENTZ, Kai, 31139 Hildesheim (DE); WARNECKE, Karl, 31079 Sibbesse (DE); HUKE, Stefan, 31319 Sehnde (DE); EID, Tilmann, 30449 Hannover (DE); HARTMANN, Bernd, 53501 Grafschaft-Leimersdorf (DE)
(74) Vertreter: Jostarndt Patentanwalts-AG
(86) Internationale Anmeldenummer: PCT/EP2014/057565
(87) Internationale Veröffentlichungsnummer: WO 2014/170294

(56) Entgegenhaltungen:
- EP-A1- 1 382 553
- EP-A1- 2 052 998
- WO-A1-99/03765
- WO-A1-2009/029091
- WO-A2-2007/108852
- DE-A1- 4 332 341
- DE-U1- 29 710 147
- US-A1- 2001 030 102
- US-A1- 2003 209 408
- US-A1- 2009 229 953

## Beschreibung

Die Erfindung betrifft ein Verfahren und eine Vorrichtung zur Vereinzelung von Packstücken, insbesondere zur Vereinzelung von Paketen.

Pakete werden beispielsweise als Postsendungen von Logistikunternehmen von einem Absender zu einem Empfänger transportiert. Dabei werden die Pakete üblicherweise zunächst zu Paketzentren, den Ausgangszentren, transportiert, wo sie nach Empfangsgebieten sortiert werden. Von dort werden sie gesammelt zur weiteren Paketzentren in dem jeweiligen Empfangsgebiet, den Eingangszentren, transportiert. Hier können die Pakete nach Unterzentren sortiert werden, von wo sie der Empfangsadresse zugestellt werden können. In den Paketzentren werden täglich große Mengen von Paketen angeliefert. Diese Pakete können wegen der großen Menge wirtschaftlich nur automatisch sortiert werden. Übliche Sortieranlagen benötigen aber einen Strom einzelner Pakete. Die Anlieferungen der Pakete in den Paketzentren erfolgt üblicherweise mittels Lastkraftwagen, die beispielsweise mit einem Entlademodul entladen werden. Dabei werden die Pakete in Form eines ungeordneten Pakethaufens, einem so genannten Bulk, der Sortieranlage zur Verfügung gestellt. In diesem Bulk liegen die Pakete als dreidimensionaler Haufen vor, das heißt die Pakete befinden sich hinter-, neben- und übereinander. Dabei können die Pakete unterschiedliche Abmessungen in allen drei Dimensionen aufweisen. Zusätzlich müssen die Pakete keine Quaderform aufweisen, sondern können alle möglichen Formen, insbesondere auch rollenförmige Formen, aufweisen. Darüber hinaus können die Pakete auch unterschiedliche Gewichte aufweisen.

Im Stand der Technik sind zur Vereinzelung Handhabungsvorrichtungen und Roboter bekannt. Beispielsweise offenbart die europäische Patentanmeldung EP 0499899 A1 eine Vorrichtung zum Vereinzeln von paketweise zusammengestelltem Stückgut mit variablem Querschnitt und unterschiedlichen Eingangslängen. Die Pakete werden mit einer ersten Fördereinrichtung zur Vereinzelungsstation transportiert, wo die Pakete mit Greifvorrichtungen gegriffen und einzelnen auf eine zweite Fördereinrichtung abgesetzt werden.

Darüber hinaus sind dem Fachmann Portalroboter wohl bekannt. Solche Portalroboter verfügen beispielsweise über einen Greifarm und können über vier und mehr Freiheitsgrade verfügen. Mit solchen Robotern können Pakete gegriffen und einzelnen an anderer Stelle abgesetzt werden.

Damit mit solchen Handhabungsgeräten und Robotern Pakete gegriffen werden können, ist es vorteilhaft, wenn die Pakete im Moment des Greifens still liegen. Mit einer Sensorik muss die Lage des Paketes erfasst werden, damit die Greifvorrichtung in richtiger Stellung das jeweilige Paket anfahren kann. Greifvorrichtungen und Roboter sind aufwändig in der Herstellung und daher relativ teuer. Die notwendige Sensorik verteuert eine entsprechende Vorrichtung weiter. Darüber hinaus müssen mehrere solcher Vorrichtungen parallel benutzt werden, um den üblichen Paketdurchsatz in Paketzentren bewältigen zu können. Das Dokument EP 1 382 553 A1 offenbart ein Verfahren und eine Vorrichtung gemäß den Oberbegriffen der Ansprüche 1 und 9. Pakete werden durch mehrere hintereinander und senkrecht aneinander angeordneten Fördermittel vereinzelt. Durch eine solche Anordnung erfolgen keine Lücken zwischen nebeneinander angeordneten Packstücke. Der Vereinzelungschritt ist somit nicht optimal. Aufgabe der Erfindung ist es daher, ein Verfahren und eine Vorrichtung zur Vereinzelung von als Bulk vorliegenden Postsendungen, insbesondere von Paketen, anzugeben, die die zuvor beschriebenen Nachteile bekannter Anlagen minimiert. Erfindungsgemäß wird diese Aufgabe durch ein Verfahren mit den Merkmalen des unabhängigen Anspruches 1 gelöst. Vorteilhafte Weiterbildungen des Verfahrens ergeben sich aus den Unteransprüchen 2-8. Die Aufgabe wird ferner durch eine Vorrichtung nach Anspruch 9 gelöst. Vorteilhafte Ausführungsformen der Vorrichtung ergeben sich aus den Unteransprüchen 10-17.

Das erfindungsgemäße Verfahren zur Vereinzelung von Packstücken geht davon aus, dass die Packstücke zunächst als unsortierter, in alle dreidimensionen ausgedehnter Haufen, das heißt als sogenannter Bulk, vorliegen. Dabei liegen die Packstücke vor-, neben- und übereinander. Erfindungsgemäß werden die Packstücke in Form eines Packstückstroms auf mindestens zwei unterschiedlichen Transportmitteln mit unterschiedlichen Transportgeschwindigkeiten transportiert, wobei die Transportrichtung mindestens einmal um circa 45° umgelenkt wird. Dabei wird der Packstückstrom zunächst in der Ebene ausgebreitet, indem übereinander liegende Packstücke zu Fall gebracht werden. Der sich ausbildende zweidimensionale Packstückstrom wird teilweise anschließend und teilweise parallel dazu über das Vergrößern der zur Verfügung stehenden Fläche mit anschließendem Zusammenführen in einen einlagigen und einreihigen, das heißt eindimensionalen, Packstückstrom überführt.

In einer vorteilhaften Weiterbildung des erfindungsgemäßen Verfahrens werden die Packstücke während des Transports auf den mindestens zwei unterschiedlichen Transportmitteln dazu in unterschiedlichen Höhen transportiert.

Für die Vereinzelung hat es sich als vorteilhaft erwiesen, wenn der Packstückstrom in der mindestens einen Umlenkung in mehrere Packstückströme aufgeteilt wird, wobei es weiterhin vorteilhaft ist, wenn die mehreren Packstückströme mit unterschiedlichen Transportgeschwindigkeiten transportiert werden.

Nach der Aufteilung auf mehrere Packstückströme werden die Packstückströme in einer vorteilhaften Ausführungsform des erfinderischen Verfahrens wieder zu einem einzelnen Packstückstrom vereint.

In einer besonders vorteilhaften Ausführungsform werden die Packstücke auf fünfzehn unterschiedlichen Transportmitteln transportiert und dabei vereinzelt. Dabei erfolgt ein horizontaler Transport der Packstücke mittels eines ersten Transportmittels mit einer ersten Transportgeschwindigkeit, wobei das erste Transportmittel eine Startseite und eine in Transportrichtung dahinter angeordnete Auslaufseite aufweist. Das erste Transportmittel kann Seitenführungen aufweisen, die verhindern, dass Packstücke seitlich von dem ersten Transportmittel herabfallen können. Die Packstücke können sich seitlich bis zu den Seitenführungen ausbreiten. Aufgrund der schüttgutartigen Lage der Packstücke im Bulk auf dem Transportmittel, welches den Bulk transportiert, kommt es zu Relativbewegungen zwischen den Packstücken untereinander, den Packstücken und dem Transportmittel und den Packstücken und den Seitenführungen. In einer vorteilhaften Ausführungsform ist das erste Transportmittel ein Scharnierkettenförderer. Es hat sich weiterhin als vorteilhaft erwiesen, wenn das erste Transportmittel die Packstücke mit einer ersten Transportgeschwindigkeit von ungefähr 1,5 m/min transportiert.

Es folgt eine Übergabe der Packstücke zu einem zweiten Transportmittel mit einer Einlaufseite und einer in Transportrichtung dahinter angeordneten Auslaufseite, wobei die Einlaufseite des zweiten Transportmittels tiefer angeordnet ist als die Auslaufseite des ersten Transportmittels und wobei das zweite Transportmittel mit einem ersten Steigungswinkel α₁ in Transportrichtung steigend ausgeführt ist. Der Steigungswinkel α₁ kann dabei zwischen 1° und 25°, bevorzugt zwischen 7° und 15°, betragen. Bei der Übergabe auf die tiefer gelegene Einlaufseite zerfällt der dreidimensionale Packstückstrom das erste Mal. Die Packstücke werden auf dem zweiten Transportmittel mit einer höheren Geschwindigkeit als auf dem ersten Transportmittel transportiert. Beispielsweise ist eine Verdreifachung der Geschwindigkeit einer Verdreifachung der Fläche bei Beibehaltung der Breite ähnlich. Dabei hat es sich als vorteilhaft erwiesen, wenn die Oberfläche des zweiten Fördermittels besonders griffig ausgeführt wird, damit die Packstücke nach der Übergabe möglichst ruckartig die höhere Geschwindigkeit annehmen und so bei übereinander gestapelten Packstücken das unterste Packstück mitgerissen wird, während die darüber liegenden Packstücke wegen der Massenträgheit nicht so schnell mitgerissen werden und von dem untersten Packstück herabfallen. In einer vorteilhaften Ausführungsform beträgt die zweite Transportgeschwindigkeit ungefähr 4 m/min. Der dreidimensionale Packstückstrom bewegt sich weiterhin mehrlagig nebeneinander und auch noch mehrlagig übereinander, ist jedoch flacher als auf dem ersten Transportmittel. Das zweite Transportmittel kann beispielsweise glattflächige Seitenführungen aufweisen, die verhindern, dass Packstücke seitlich von dem Transportmittel herabfallen können.

Es folgt eine Übergabe der Packstücke zu einem dritten Transportmittel mit einer Einlaufseite und einer in Transportrichtung dahinter angeordneten Auslaufseite, wobei die Einlaufseite des dritten Transportmittels erneut tiefer angeordnet ist als die Auslaufseite des davor liegenden Transportmittels und wobei das dritte Transportmittel mit einem zweiten Steigungswinkel α₂ in Transportrichtung steigend ausgeführt ist. Der Steigungswinkel α₂ beträgt dabei zwischen 1° und 25°, bevorzugt zwischen 7° und 15°. Die Packstücke werden auf dem dritten Transportmittel erneut mit einer höheren Transportgeschwindigkeit transportiert als auf dem davorliegenden Transportmittel. Beispielsweise kann die dritte Transportgeschwindigkeit ungefähr 7 m/min. betragen. Dadurch fallen weitere übereinander liegende Packstücke voneinander ab. Packstücke werden von unten abgezogen, wodurch Packstücke von oben ungeordnet, aber relativ langsam nachrutschen. Der Bulk wird wiederum flacher und länger. Das dritte Transportmittel kann beispielsweise glattflächige Seitenführungen aufweisen, die verhindern, dass Packstücke seitlich von dem Transportmittel herabfallen können.

In einer vorteilhaften Ausführungsform ist das zweite Transportmittel ein Gurtförderer. Dabei kann das dritte Transportmittel ebenfalls ein Gurtförderer sein.

Anschließend werden die Packstücke zu einem vierten Transportmittel mit einer Einlaufseite und einer in Transportrichtung dahinter angeordneten Auslaufseite übergeben, wobei die Einlaufseite des vierten Transportmittels tiefer angeordnet ist als die Auslaufseite des dritten Transportmittels. Die Packstücke werden auf dem vierten Transmittel mit einer erneut erhöhten Transportgeschwindigkeit transportiert. Beispielsweise kann diese neue Transportgeschwindigkeit mehr als vierfach so hoch sein wie die Transportgeschwindigkeit auf dem davor liegenden Transportmittel, wodurch der Packstückstrom deutlich entzerrt wird. In einer vorteilhaften Ausführungsform beträgt die vierte Transportgeschwindigkeit ungefähr 32 m/min. Es werden große Lücken zwischen den Packstücken erzeugt. Übereinander liegen Packstücke jetzt nur noch vereinzelt. Das vierte Transportmittel kann beispielsweise glattflächige Seitenführungen aufweisen, die verhindern, dass Packstücke seitlich von dem Transportmittel herabfallen können.

Von dem vierten Transportmittel wird eine erste Teilmenge der Packstücke zu einem fünften Transportmittel mit einer Einlaufseite und einer in Transportrichtung dahinter angeordneten Auslaufseite übergeben, während eine zweite Teilmenge der Packstücke zu einem im Wesentlichen parallel zum fünften Transportmittel angeordneten siebten Transportmittel mit einer Einlaufseite und einer in Transportrichtung dahinter angeordneten Auslaufseite übergeben wird, wobei die Einlaufseiten des fünften und siebten Transportmittels in einem Winkel von ungefähr 45° zur Auslaufseite des vierten Transportmittels angeordnet sind. Dadurch wird eine Verbreiterung der Förderfläche erreicht, wodurch sich die Packstücke neben den durch die stetige Geschwindigkeitserhöhung geschaffenen Lücken hintereinander auch Lücken nebeneinander schaffen. Die erste Teilmenge der Packstücke wird auf dem fünften Transportmittel mit einer fünften Transportgeschwindigkeit transportiert, wobei die fünfte Transportgeschwindigkeit größer ist als die vierte Transportgeschwindigkeit. Die zweite Teilmenge der Packstücke wird auf dem siebten Transportmittel mit einer siebten Transportgeschwindigkeit transportiert, wobei die siebte Transportgeschwindigkeit größer ist als die vierte Transportgeschwindigkeit. Transportgeschwindigkeiten von beispielsweise 40 m/min. für das fünfte Transportmittel und von 70 m/min. für das siebte Transportmittel haben sich als vorteilhaft erwiesen.

Die erste Teilmenge der Packstücke wird zu einem sechsten Transportmittel mit einer Einlaufseite und einer in Transportrichtung dahinter angeordneten Auslaufseite übergeben und auf dem sechsten Transportmittel mit einer sechsten Transportgeschwindigkeit transportiert, wobei die sechste Transportgeschwindigkeit größer ist als die fünfte Transportgeschwindigkeit, wodurch der Packstückstrom weiter entzerrt wird. Eine sechste Transportgeschwindigkeit von ungefähr 50 m/min. hat sich als vorteilhaft erwiesen. Das fünfte und sechste Transportmittel können beispielsweise glattflächige Seitenführungen an ihrer Außenseite, das heißt der dem siebten Transportmittel gegenüberliegenden Seite, aufweisen, die verhindern, dass Packstücke seitlich von den Transportmitteln herabfallen können. Ebenso kann das siebte Transportmittel an seiner dem fünften und sechsten Transportmittel gegenüberliegenden Seite eine beispielsweise glattflächige Seitenführung aufweisen, die verhindert, dass Packstücke seitlich von dem Transportmittel herabfallen können.

Es hat sich als vorteilhaft erwiesen, wenn das vierte und/oder fünfte und/oder sechste und/oder siebte Transportmittel ein Streifenförderer ist. Insbesondere lässt sich mit einem Streifenförderer die Anbindung an ein vorhergehendes oder nachfolgendes Transportmittel unter einem Winkel, beispielsweise unter einem Winkel von 45°, besonders unkompliziert herstellen.

Anschließend werden die erste und zweite Teilmenge der Packstücke über eine an die Auslaufseiten der sechsten und siebten Transportmittel angrenzende erste Längsseite eines achten Transportmittels auf ein achtes Transportmittel mit einer Einlaufseite, einer in Transportrichtung dahinter angeordneten Auslaufseite und einer zweiten Längsseite übergeben, wobei die zweite Längsseite im Wesentlichen parallel zur ersten Längsseite angeordnet ist und die Längsseiten in einem Winkel von ungefähr 45° zu den Auslaufseiten der sechsten und siebten Transportmittel angeordnet sind und wobei das achte Transportmittel um einen Neigungswinkel β₁ um seine Längsachse so geneigt ist, dass seine erste Längsseite höher liegt als seine zweite Längsseite. Der Neigungswinkel β₁ kann zwischen 10° und 40°, bevorzugt zwischen 20° und 25°, betragen. Das achte Transportmittel ist dabei so angeordnet, dass seine erste Längsseite niedriger liegt als die Auslaufseiten des sechsten und siebten Transportmittels. Das achte Transportmittel kann mindestens einen Abweiser aufweisen, der in einer im Wesentlichen um 45° gegenüber der Längsrichtung des achten Transportmittels geneigten Richtung in einer solchen Höhe über dem achten Transportmittel fixiert ist, dass die Bewegung des Transportmittels nicht behindert ist, während auf dem Transportmittel transportierte Packstücke von dem Abweiser aus der von dem Transportmittel vorgegebenen Transportrichtung abgelenkt werden. Dadurch wird der Packstückstrom weiter aufgeteilt. Darüber hinaus bewirkt dieser Abweiser, dass Packstücke, die sehr fest auf der dem achten Transportmittel verharren, nicht zwingend bis an die Auslaufseite des Transportmittels transportiert werden und dort einen Stau verursachen könnten. Die Packstücke werden auf dem achten Transportmittel mit einer achten Transportgeschwindigkeit transportiert, wobei die achte Transportgeschwindigkeit niedriger ist als die sechste und siebte Transportgeschwindigkeit. Eine Transportgeschwindigkeit von ungefähr 32 m/min. hat sich als vorteilhaft erwiesen.

Die Packstücke werden über die zweite Längsseite des achten Transportmittels auf ein neuntes Transportmittel, das über eine Einlaufseite, eine Auslaufseite und eine erste Längsseite und eine zweite Längsseite verfügt, übergeben, wobei die Übergabe der Packstücke auf das neunte Transportmittel über die erste Längsseite des neunten Transportmittels erfolgt und wobei das neunte Transportmittel um einen Neigungswinkel β₂ um seine Längsachse so geneigt ist, dass seine erste Längsseite höher liegt als seine zweite Längsseite. Dabei kann der Neigungswinkel β₂ zwischen 5° und 25°, bevorzugt zwischen 9° und 14°, betragen. Die Packstücke werden auf dem neunten Transportmittel mit einer neunten Transportgeschwindigkeit transportiert, wobei die neunte Transportgeschwindigkeit mit beispielsweise ungefähr 50 m/min. höher ist als die achte Transportgeschwindigkeit.

Ein erster Teil der Packstücke wird zu einem zehnten Transportmittel mit einer Einlaufseite und einer in Transportrichtung dahinter angeordneten Auslaufseite übergeben, während der verbleibende zweite Teil der Packstücke zu einem im Wesentlichen parallel zum neunten Transportmittel angeordnetem elften Transportmittel mit einer Einlaufseite und einer in Transportrichtung dahinter angeordneten Auslaufseite sowie einer dem neunten Transportmittel zugewandten ersten Längsseite und einer der ersten Längsseite gegenüberliegenden zweiten Längsseite übergeben wird, wobei das zehnte und das elfte Transportmittel im Wesentlichen horizontal angeordnet sind und sich die Auslaufseite des neunten Transportmittels in einer höheren oder gleichhohen Position befindet wie die Einlaufseite des zehnten Transportmittel und die zweite Längsseite des neunten Transportmittels sich auf einer höheren oder gleichhohen Position befindet wie die erste Längsseite des elften Transportmittels, und wobei die Übergabe des verbleibenden zweiten Teils der Packstücke von dem neunten Transportmittel auf das elfte Transportmittel über die zweite Längsseite des neunten Transportmittels und die erste Längsseite des elften Transportmittels erfolgt. Der erste Teil der Packstücke wird auf dem zehnten Transportmittel mit einer zehnten Transportgeschwindigkeit transportiert, wobei die zehnte Transportgeschwindigkeit größer ist als die neunte Transportgeschwindigkeit. Der verbleibende zweite Teil der Packstücke wird auf dem elften Transportmittel mit einer elften Transportgeschwindigkeit transportiert, wobei die elfte Transportgeschwindigkeit größer ist als die neunte und als die zehnte Transportgeschwindigkeit. Transportgeschwindigkeiten in Höhe von ungefähr 60 m/min. für die zehnte Transportgeschwindigkeit und in Höhe von ungefähr 100 m/min. für die elfte Transportgeschwindigkeit haben sich als vorteilhaft erwiesen.

Eine erste Teilmenge des ersten Teils der Packstücke wird zu dem elften Transportmittel übergeben, wobei die Übergabe von der zweiten Längsseite des neunten Transportmittels auf die erste Längsseite des elften Transportmittels erfolgt. Die verbleibende Teilmenge des ersten Teils der Packstücke wird auf ein zwölftes Transportmittel mit einer Einlaufseite und einer in Transportrichtung dahinter angeordneten Auslaufseite sowie einer an die zweite Längsseite des zehnten Transportmittels angrenzenden ersten Längsseite und einer der ersten Längsseite gegenüberliegenden zweiten Längsseite übergeben, wobei die verbleibende Teilmenge des ersten Teils der Packstücke über die zweite Längsseite des zehnten Transportmittels und die erste Längsseite des zwölften Transportmittels auf das zwölfte Transportmittel übergeben wird. Der zweite Teil der Packstücke wird über die Auslaufseite des elften Transportmittels und die Einlaufseite des zwölften Transportmittels auf das zwölfte Transportmittel übergeben. Die Packstücke werden auf dem zwölften Transportmittel mit einer zwölften Transportgeschwindigkeit transportiert, wobei die zwölfte Transportgeschwindigkeit kleiner ist als die zehnte und die elfte Transportgeschwindigkeit. Beispielsweise kann die zwölfte Transportgeschwindigkeit ungefähr 50 m/min. betragen. Anschließend werden die Packstücke zu einem dreizehnten Transportmittel mit einer Einlaufseite und einer in Transportrichtung dahinter angeordneten Auslaufseite übergeben und auf dem dreizehnten Transportmittel mit einer dreizehnten Transportgeschwindigkeit weiter transportiert, wobei die dreizehnte Transportgeschwindigkeit größer ist als die zwölfte Transportgeschwindigkeit. Eine gegenüber der zwölften Transportgeschwindigkeit deutlich höhere dreizehnte Transportgeschwindigkeit von beispielsweise 150 m/min. hat sich als besonders vorteilhaft erwiesen.

Durch die Anordnung des achten, neunten und elften Fördermittels als kaskadierte, im Wesentlichen parallel aufgestellte Fördermittel, wird den Packstücken die Freiheit gegeben, sich bei seitlichem Drängeln auf die tieferliegenden Fördermittel seitlich herabfallen zu lassen. Die tieferliegenden Fördermittel fördern mit einer steigenden Geschwindigkeit, wobei sich eine Steigerung der Geschwindigkeiten von beispielsweise 32 m/min als achte Transportgeschwindigkeit über 50 m/min als neunte Transportgeschwindigkeit auf 100m/min als elfte Transportgeschwindigkeit als vorteilhaft erwiesen hat.

An der jeweiligen Auslaufseite der im Wesentlichen parallel angeordneten achten, neunten und zwölften Transportmittel ist jeweils ein schräger, fest stehender Abweiser montiert. Dabei können diese Abweiser auch einstückig ausgeführt sein, so dass sich der Abweiser über alle drei Auslaufseiten erstreckt. Dabei sind die Abweiser in Winkeln γ₁, γ₂, γ₃ jeweils zwischen 10° und 80°, bevorzugt zwischen 15° und 50°, zur Längsachse der Fördermittel montiert. Die oder der Abweiser zwingt die Packstücke in Form einer Seitenführung auf das nächste, parallel und etwas tiefer liegende Fördermittel, das zudem noch mit einer erhöhten Geschwindigkeit abzieht. Ein weiterer Effekt dieser festen, gleitfreudigen Seitenführung ist, dass sich die Packstücke daran üblicherweise vollflächig anschmiegen und somit ausrichten. Dieses Ausrichten und Anschmiegen ist allerdings auch abhängig von Gewicht und Fläche des Packstücks sowie dem Reibwert zwischen Packstück und der Oberfläche des jeweiligen Fördermittels. Vorteilhaft ist es daher, zumindest das letzte dieser drei kaskadierten Fördermittel als Rollenförderer mit einer sehr engen Rollenteilung auszuführen. In einer vorteilhaften Ausführungsform sind das achte, neunte und elfte Fördermittel Gurtförderer, während das zehnte Fördermittel ein Schrägrollenförderer ist. Dabei sind die Rollen dieses Schrägrollenförderers in einer besonders bevorzugten Ausführungsform schräg angeordnet, wodurch der Effekt der schrägen Seitenführung verstärkt wird, dass sich einzelne Packstücke, die noch nicht durch die geneigte Anordnung des achten und neunten Transportmittels auf das nachfolgende elfte Transportmittel gerutscht sind, in Förderrichtung nach rechts auf das folgende zwölfte Transportmittel übergeben. Zusätzlich richten sich die Packstücke an der linksseitigen Seitenführung aus. In diesem Bereich der Vorrichtung wird der zwischenzeitlich in den vorhergehenden Bereichen vom dreidimensionalen zum zweidimensionalen Packstückstrom umgewandelten Packstückstrom in einen eindimensionalen Packstückstrom gewandelt. Die von dem achten, neunten und elften Transportmittel auf das zwölfte Transportmittel transportierten Packstücke liegen zum Teil hier noch nebeneinander. An der Seitenführung des zwölften Transportmittels richten sich die in Förderrichtung gesehen vorn liegenden Packstücke aus. Liegen Packstücke noch parallel, so werden durch die Seitenführung die Packstücke parallel nach in Förderrichtung gesehen rechts verschoben. In einer besonders vorteilhaften Ausführungsform ist das zwölfte Fördermittel als Staurollenförderer ausgeführt, auf dem die Packstücke zu einem zweidimensionalen Packstückstrom aufgestaut werden. Ist der Staurollenförderer als Schrägrollenförderer ausgestaltet, wird der durch die schräge Seitenführung hervorgerufene Effekt, dass die Packstücke auf das nachfolgende dreizehnte Transportmittel übergeben werden, verstärkt. Das rechte der beiden parallel liegenden Packstücke wird nun zuerst auf das deutlich schneller laufende dreizehnte Transportmittel abgeschoben. Eine ungefähr um den Faktor drei gegenüber der zwölften Transportgeschwindigkeit erhöhte dreizehnte Transportgeschwindigkeit hat sich dabei als vorteilhaft erwiesen. Zusätzlich ist es von Vorteil, wenn die Oberfläche des dreizehnten Transportmittels besonders griffig ausgeführt wird, so dass eine hohe Reibung zwischen Packstücken und der Transportmitteloberfläche auftritt. In einer besonders vorteilhaften Ausführungsform ist das dreizehnte Transportmittel ein mit ungefähr 150 m/min laufender Gurtförderer mit einem Transportband mit besonders griffiger Oberfläche. Von diesem Band erfasste Packstücke werden damit weggezerrt, so dass auf dem dreizehnten Transportmittel praktisch keine Packstücke mehr nebeneinander liegen und der Packstückstrom eindimensional ist.

Die Packstücke werden von dem dreizehnten Transportmittel zu einem vierzehnten Transportmittel mit einer Einlaufseite und einer in Transportrichtung dahinter angeordneten Auslaufseite übergeben, wobei das vierzehnte Transportmittel einen Kreisbogen von ungefähr 90° beschreibt. Die Packstücke werden auf dem vierzehnten Transportmittel mit einer vierzehnten Transportgeschwindigkeit transportiert, wobei die vierzehnte Transportgeschwindigkeit nochmals gegenüber der dreizehnten Transportgeschwindigkeit erhöht ist. Beispielsweise hat sich eine vierzehnte Transportgeschwindigkeit von ungefähr 160 m/min. als besonders vorteilhaft erwiesen. Die hohe Kurvengeschwindigkeit führt dabei dazu, dass rotationssymmetrische Packstücke wie beispielsweise Rollen durch die Zentrifugalkraft an die Außenseite des Transportmittels rollen und am Auslauf der Kurve einem Behälter zugeführt werden können. Zumindest am Außenradius dieses Fördermittels ist dafür in einer bevorzugten Ausführungsform eine glattflächige Seitenführung vorgesehen. Das vierzehnte Transportmittel ist dabei in einer bevorzugten Ausführungsform als Kurvengurtförderer ausgeführt. Die Breite des vierzehnten Transportmittels ist kleiner als die des nachfolgenden fünfzehnten Transportmittels, das sich an dem Innenradius des vierzehnten Transportmittels ausgerichtet anschließt. Auf diese Art können nicht sortierfähige rotationssymmetrische Packstücke aussortiert und gesammelt werden.

Mindestens eine Teilmenge der Packstücke, die nicht an der Auslaufseite des vierzehnten Transportmittels aussortiert wurde, wird zu einem fünfzehnten Transportmittel mit einer Einlaufseite und einer in Transportrichtung dahinter angeordneten Auslaufseite übergeben und darauf weiter transportiert. In einer vorteilhaften Ausführungsform handelt es sich bei dem fünfzehnten Transportmittel um einen Schrägrollenförderer. Auf diesem auch Ausrichtförderer genannten Transportmittel werden die nun hintereinander geförderten Packstücke einseitig ausgerichtet.

An der Auslaufseite des letzten, fünfzehnten Transportmittels liegt damit ein eindimensionaler Packstückstrom vor, von dem die Packstücke einseitig ausgerichtet weiter verarbeitet, beispielsweise sortiert, werden können.

In einer weiteren Ausführungsform kann zumindest einer der Gurtförderer einen endlosen Fördergurt aufweisen, der an der Auslaufseite des jeweiligen Gurtförderers um ungefähr 180° umgelenkt und auf der Unterseite des jeweiligen Gurtförderers zurück zur Einlaufseite des jeweiligen Gurtförderers läuft, wo er erneut um ungefähr 180° umgelenkt wird, so dass er auf der Oberseite des jeweiligen Gurtförderers wieder in Richtung der Auslaufseite läuft, wobei in den Fördergurt mindestens ein Relativfördermittel eingelassen ist, wobei das Relativfördermittel einen in einer Lagerung um sich selbst drehbar gelagerten Rotationskörper aufweist und dieser Rotationskörper während des Laufens des Fördergurtes auf der Unterseite des Gurtförderers in Rotation versetzt wird. Dabei kann die Lagerung so ausgestaltet sein, dass der Rotationskörper nur in eine Richtung, bevorzugt in Förderrichtung, rotieren kann, wodurch ein ungewolltes Verlangsamen des Packstückstroms verhindert werden kann.

In einer weiteren vorteilhaften Ausführungsform wird der Rotationskörper während des Laufens des Fördergurtes auf der Unterseite des Gurtförderers durch Reibung an einer in Relation zu der Bewegung des Fördergurts feststehenden Fläche in Rotation versetzt. Dies stellt eine besonders einfache und effektive Methode dar, das Rotationsmittel ohne einen eigenen Antrieb vorzusehen in Rotation zu versetzen.

Dabei kann der Rotationskörper eine Kugel sein. Alternativ dazu kann der Rotationskörper auch eine Rolle sein.

In einer weiteren vorteilhaften Ausführungsform weist zumindest eine der in vertikaler Richtung höher angeordneten Auslaufseiten beispielsweise des zweiten und/oder dritten Transportmittels eine Kugelrutsche auf, wobei die Kugelrutsche eine Viertelkugelform aufweist und sich der oberste Punkt der Kugelrutschenoberfläche auf gleicher oder niedrigerer Höhe befindet wie die Auslaufseite und sich der Fuß der Kugelrutsche in Breitenrichtung ungefähr gleich erstreckt wie die Breite der Auslaufseite, wobei die Einlaufseite des folgenden Transportmittels breiter ist als die Kugelrutsche. Mit einer solchen Kugelrutsche lässt sich der Höhenunterschied zwischen der Auslaufseite des einen und der Einlaufseite des folgenden Transportmittels für die Packstücke besonders schonend überwinden, wobei der Effekt, dass in Höherichtung aufgestapelte Packstücke bei der Übergabe von dem einen zu dem nachfolgenden Transportmittel kippen, erhalten bleibt.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Abbildungen.

Von den Abbildungen zeigt:
- Fig. 1: eine Draufsicht auf eine erfindungsgemäße Vorrichtung mit fünfzehn Transportmitteln;
- Fig. 2: eine Seitenansicht der erfindungsgemäßen Vorrichtung aus Fig. 1;
- Fig. 3: eine Draufsicht auf eine erfindungsgemäße Kugelrutsche;
- Fig. 4: eine Seitenansicht einer erfindungsgemäßen Kugelrutsche;
- Fig. 5: eine Draufsicht auf ein erfindungsgemäßes Förderband mit eingelassenen Relativfördermitteln.

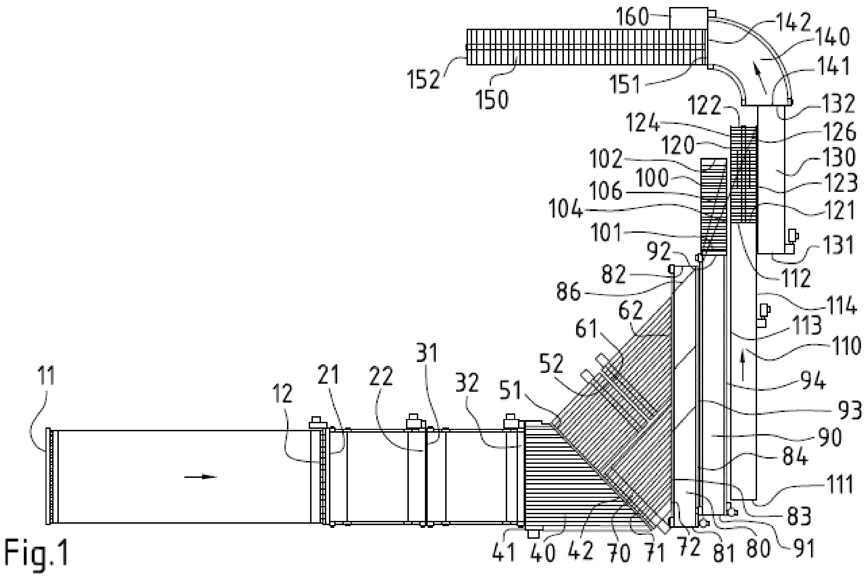

Fig. 1 zeigt eine Draufsicht auf eine erfindungsgemäße Vorrichtung zur Vereinzelung von Packstücken mit fünfzehn Transportmitteln. Die zu vereinzelnden Packstücke 1 werden der Vorrichtung als dreidimensionaler Haufen, einem sogenannten Bulk, auf dem ersten Transportmittel 10 zur Verfügung gestellt. Die Packstücke 1 sind in den Figuren nicht dargestellt. Die Packstücke liegen in dem Bulk vor-, neben- und übereinander. Das erste Transportmittel ist als Scharnierkettenförderer mit einer Einlaufseite 11 und einer Auslaufseite 12 ausgeführt. Die Packstücke 1 werden mittels des ersten Transportmittels 10 mit circa 1,5 m/min. in Richtung des sich anschließenden zweiten Transportmittels 20 transportiert. Der Scharnierkettenförderer weist Seitenführungen auf (nicht dargestellt), die verhindern, dass Packstücke 1 seitlich von dem Transportmittel 10 herabfallen können. Die Packstücke 1 können sich seitlich bis zu den Seitenführungen ausbreiten. Aufgrund der schüttgutartigen Lage der Packstücke 1 im Bulk auf dem Scharnierkettenförderer 10 kommt es zu Relativbewegungen zwischen den Packstücken 1 untereinander, den Packstücken 1 und dem Transportmittel 10 und den Packstücken 1 und den Seitenführungen.

Es folgt eine Übergabe der Packstücke 1 zu einem zweiten Transportmittel 20 in Form eines Gurtförderers mit einer Einlaufseite 21 und einer in Transportrichtung dahinter angeordneten Auslaufseite 22, wobei die Einlaufseite 21 des zweiten Transportmittels 20 tiefer angeordnet ist als die Auslaufseite 11 des ersten Transportmittels 10 und wobei das zweite Transportmittel 20 mit einem ersten Steigungswinkel α₁ von 9° in Transportrichtung steigend ausgeführt ist. Bei der Übergabe auf die tiefer gelegene Einlaufseite 21 zerfällt der dreidimensionale Packstückstrom das erste Mal. Dabei beträgt der Höhenunterschied zwischen der Auslaufseite des ersten Transportmittels 10 und der Einlaufseite des zweiten Transportmittels circa 20 mm. Die Packstücke 1 werden auf dem zweiten Transportmittel 20 mit einer Geschwindigkeit von 4 m/min. transportiert. Das Gurtband des zweiten Fördermittels 20 weist eine besonders griffige Oberfläche auf. Die Packstücke 1 nehmen dadurch nach der Übergabe die höhere Geschwindigkeit ruckartig an, wodurch bei übereinander gestapelten Packstücken 1 das unterste Packstück 1 mitgerissen wird, während die darüber liegenden Packstücke 1 wegen der Massenträgheit nicht so schnell mitgerissen werden und von dem untersten Packstück 1 herabfallen. Der dreidimensionale Packstückstrom bewegt sich weiterhin mehrlagig nebeneinander und auch noch mehrlagig übereinander, ist jedoch flacher als auf dem ersten Transportmittel 10. Das zweite Transportmittel 20 weist glattflächige Seitenführungen auf, die verhindern, dass Packstücke 1 seitlich von dem Transportmittel 20 herabfallen können.

Es folgt eine Übergabe der Packstücke 1 zu einem dritten Transportmittel 30 mit einer Einlaufseite 31 und einer in Transportrichtung dahinter angeordneten Auslaufseite 32, wobei die Einlaufseite 31 des dritten Transportmittels 30 erneut circa 20 mm tiefer angeordnet ist als die Auslaufseite 32 des davor liegenden zweiten Transportmittels 20 und wobei das dritte Transportmittel mit einem zweiten Steigungswinkel α₂ von 9° in Transportrichtung steigend ausgeführt ist. Die Packstücke 1 werden auf dem dritten Transportmittel 30, das ebenfalls als Gurtförderer ausgestaltet ist, erneut mit einer höheren Transportgeschwindigkeit von ungefähr 7 m/min. transportiert als auf dem davor liegenden zweiten Transportmittel 20. Dadurch fallen weitere übereinander liegende Packstücke 1 voneinander ab. Packstücke 1 werden von unten abgezogen, wodurch Packstücke 1 von oben ungeordnet, aber relativ langsam nachrutschen. Der Bulk wird wiederum flacher und länger. Das dritte Transportmittel 30 weist ebenfalls glattflächige Seitenführungen auf (nicht dargestellt), die verhindern, dass Packstücke 1 seitlich von dem Transportmittel 30 herabfallen können.

Anschließend werden die Packstücke 1 zu einem vierten Transportmittel 40 mit einer Einlaufseite 41 und einer in Transportrichtung dahinter angeordneten Auslaufseite 42 übergeben, wobei die Einlaufseite 41 des vierten Transportmittels 40 circa 20 mm tiefer angeordnet ist als die Auslaufseite 32 des dritten Transportmittels 30. Die Packstücke 1 werden auf dem vierten Transmittel 40 mit einer erneut erhöhten Transportgeschwindigkeit von circa 32 m/min. transportiert. Dadurch wird der Packstückstrom deutlich entzerrt. Es werden große Lücken zwischen den Packstücken 1 erzeugt. Übereinander liegen Packstücke 1 jetzt nur noch vereinzelt. Das vierte Transportmittel 40 ist als Streifenförderer ausgeführt und weist glattflächige Seitenführungen auf (nicht dargestellt), die verhindern, dass Packstücke 1 seitlich von dem Transportmittel 40 herabfallen können.

Von dem vierten Transportmittel 40 wird eine erste Teilmenge der Packstücke 1 zu einem fünften Transportmittel 50 mit einer Einlaufseite 51 und einer in Transportrichtung dahinter angeordneten Auslaufseite 52 übergeben, während eine zweite Teilmenge der Packstücke 1 zu einem im Wesentlichen parallel zum fünften Transportmittel 50 angeordnetem siebten Transportmittel 70 mit einer Einlaufseite 71 und einer in Transportrichtung dahinter angeordneten Auslaufseite 72 übergeben wird, wobei die Einlaufseiten 51, 71 des fünften und siebten Transportmittels 50, 70 in einem Winkel von ungefähr 45° zur Auslaufseite des vierten Transportmittels 40 angeordnet sind. Dadurch wird eine Verbreiterung der Förderfläche erreicht, wodurch sich die Packstücke 1 neben den durch die stetige Geschwindigkeitserhöhung geschaffenen Lücken hintereinander auch Lücken nebeneinander schaffen. Die erste Teilmenge der Packstücke 1 wird auf dem fünften Transportmittel 50 mit einer Geschwindigkeit von circa 40 m/min. transportiert. Die zweite Teilmenge der Packstücke 1 wird auf dem siebten Transportmittel 70 mit einer Geschwindigkeit von ca. 70 m/min. transportiert.

Die erste Teilmenge der Packstücke 1 wird von dem fünften Transportmittel 50 zu einem sechsten Transportmittel 60 mit einer Einlaufseite 61 und einer in Transportrichtung dahinter angeordneten Auslaufseite 62 übergeben und auf dem sechsten Transportmittel 60 mit einer sechsten Transportgeschwindigkeit von circa 50 m/min. transportiert. Dadurch wird der Packstückstrom weiter entzerrt. Das fünfte und sechste Transportmittel 50, 60 weisen glattflächige Seitenführungen an ihrer Außenseite, das heißt der dem siebten Transportmittel 70 gegenüberliegenden Seite, auf (nicht dargestellt), die verhindern, dass Packstücke 1 seitlich von den Transportmitteln 50, 60 herabfallen können. Ebenso weist das siebte Transportmittel 70 an seiner dem fünften und sechsten Transportmittel 50, 60 gegenüberliegenden Seite eine glattflächige Seitenführung auf (nicht dargestellt), die verhindert, dass Packstücke 1 seitlich von dem Transportmittel 70 herabfallen können. Durch die Anordnung der fünften, sechsten und siebten Transportmittel 50, 60, 70 um circa 45° zur Längsachse des vierten Transportmittels 40 erfolgt eine Verbreiterung der zur Verfügung stehenden Transportbreite. Dabei beträgt die Breite der Einlaufseite 41 des vierten Transportmittels 40 ca. 2,20 m, während die gesamte Auslaufbreite 61, 71 der parallelen sechsten und siebten Transportmittel 60, 70 über 5 m beträgt. Als viertes, fünftes, sechstes und siebtes Transportmittel 40, 50, 60, 70 kommen Streifenförderer zum Einsatz. Insbesondere lässt sich mit einem Streifenförderer die Anbindung an ein vorhergehendes oder nachfolgendes Transportmittel 30, 80 unter dem 45°-Winkel besonders unkompliziert herstellen.

Anschließend werden die erste und zweite Teilmenge der Packstücke 1 über eine an die Auslaufseiten 62, 72 der sechsten und siebten Transportmittel 60, 70 angrenzende erste Längsseite 83 eines achten Transportmittels 80 auf ein achtes Transportmittel 80 mit einer Einlaufseite 81, einer in Transportrichtung dahinter angeordneten Auslaufseite 82 und einer zweiten Längsseite 84 übergeben, wobei die zweite Längsseite 84 im Wesentlichen parallel zur ersten Längsseite 83 angeordnet ist und die Längsseiten 83, 84 in einem Winkel von ungefähr 45° zu den Auslaufseiten 62, 72 der sechsten und siebten Transportmittel 60, 70 angeordnet sind und wobei das achte Transportmittel 80 um einen Neigungswinkel β₁ von circa 22,5° um seine Längsachse so geneigt ist, dass seine erste Längsseite 83 höher liegt als seine zweite Längsseite 84. Das achte Transportmittel 80 ist dabei so angeordnet, dass seine erste Längsseite 83 niedriger liegt als die Auslaufseiten 61, 71 des sechsten und siebten Transportmittels 60, 70. Das achte Transportmittel 80 weist drei Abweiser 85, 86, 106 auf, die in einer im Wesentlichen um 45° gegenüber der Längsrichtung des achten Transportmittels 80 geneigten Richtung in einer solchen Höhe über dem achten Transportmittel 80 fixiert sind, dass die Bewegung des Transportmittels 80 nicht behindert ist. Auf dem Transportmittel 80 transportierte Packstücke 1 werden von den mittleren Abweisern 85, 86 in Einzelpackstückströme aufgeteilt. Dazu weisen die Abweiser 85, 86 eine Höhe auf, die höchstens bis an die Oberfläche der sechsten und siebten Transportmittel 60, 70 heran reicht. Der letzte Abweiser 106 befindet sich in Nähe der Auslaufseite 82 des achten Transportmittels 80 und ist so angeordnet, dass er sich in Transportrichtung des achten Transportmittels 80 gesehen hinter der in Transportrichtung des sechsten Transportmittels 60 gesehen linken Außenseite des sechsten Transportmittels 60 befindet, wodurch Packstücke 1 daran gehindert werden, über die Auslaufseite 82 des achten Transportmittels die Vorrichtung zu verlassen und gleichzeitig keine Packstücke 1 von dem sechsten Transportmittel 60 in Transportrichtung des achten Transportmittels 80 gesehen hinter den Abweiser 106 fallen können. Darüber hinaus bewirken die Abweiser 85, 86, dass Packstücke 1, die sehr fest auf der dem achten Transportmittel 80 verharren, nicht zwingend bis an die Auslaufseite 81 des Transportmittels 80 transportiert werden und dort einen Stau verursachen könnten. Die Packstücke 1 werden auf dem achten Transportmittel 80 mit einer achten Transportgeschwindigkeit von 32 m/min. transportiert. Das achte Transportmittel ist als Gurtförderer ausgeführt.

Die Packstücke werden über die zweite Längsseite 84 des achten Transportmittels 80 auf ein neuntes Transportmittel 90, das über eine Einlaufseite 91, eine Auslaufseite 92 und eine erste Längsseite 93 und eine zweite Längsseite 94 verfügt, übergeben, wobei die Übergabe der Packstücke 1 auf das neunte Transportmittel 90 über die erste Längsseite 93 des neunten Transportmittels 90 erfolgt und wobei das neunte Transportmittel 90 um einen Neigungswinkel β₂ von circa 11° um seine Längsachse so geneigt ist, dass seine erste Längsseite 93 höher liegt als seine zweite Längsseite 94. Die Packstücke 1 werden auf dem neunten Transportmittel 90 mit einer neunten Transportgeschwindigkeit von 50 m/min. transportiert. Das neunte Transportmittel 90 ist als Gurtförderer ausgeführt.

Ein erster Teil der Packstücke 1 wird zu einem zehnten Transportmittel 100 mit einer Einlaufseite 101 und einer in Transportrichtung dahinter angeordneten Auslaufseite 102 übergeben, während der verbleibende zweite Teils der Packstücke 1 zu einem im Wesentlichen parallel zum neunten Transportmittel 90 angeordnetem elften Transportmittel 110 mit einer Einlaufseite 111 und einer in Transportrichtung dahinter angeordneten Auslaufseite 112 sowie einer dem neunten Transportmittel 90 zugewandten ersten Längsseite 113 und einer der ersten Längsseite 113 gegenüberliegenden zweiten Längsseite 114 übergeben wird, wobei das zehnte und das elfte Transportmittel 100, 110 im Wesentlichen horizontal angeordnet sind und sich die Auslaufseite 92 des neunten Transportmittels 90 in einer höheren oder gleichhohen Position befindet wie die Einlaufseite 101 des zehnten Transportmittels 100 und die zweite Längsseite 94 des neunten Transportmittels 90 sich auf einer höheren oder gleichhohen Position befindet wie die erste Längsseite 113 des elften Transportmittels 110, und wobei die Übergabe des verbleibenden zweiten Teils der Packstücke 1 von dem neunten Transportmittel 90 auf das elfte Transportmittel 110 über die zweite Längsseite 94 des neunten Transportmittels 90 und die erste Längsseite 113 des elften Transportmittels 110 erfolgt. Der erste Teil der Packstücke 1 wird auf dem zehnten Transportmittel 100 mit einer zehnten Transportgeschwindigkeit von circa 60 m/min. transportiert. Der verbleibende zweite Teil der Packstücke 1 wird auf dem elften Transportmittel 110 mit einer elften Transportgeschwindigkeit von ungefähr 100 m/min. transportiert. Das zehnte Transportmittel 100 ist als Schrägrollenförderer ausgeführt, während das elfte Transportmittel 110 als Gurtförderer ausgeführt ist.

Eine erste Teilmenge des ersten Teils der Packstücke 1 wird zu dem elften Transportmittel 110 übergeben, wobei die Übergabe von der zweiten Längsseite 94 des neunten Transportmittels 90 auf die erste Längsseite 113 des elften Transportmittels 110 erfolgt. Die verbleibende Teilmenge des ersten Teils der Packstücke 1 wird auf ein zwölftes Transportmittel 120 mit einer Einlaufseite 121 und einer in Transportrichtung dahinter angeordneten Auslaufseite 122 sowie einer an die zweite Längsseite 104 des zehnten Transportmittels 100 angrenzenden ersten Längsseite 123 und einer der ersten Längsseite 123 gegenüberliegenden zweiten Längsseite 124 übergeben, wobei die verbleibende Teilmenge des ersten Teils der Packstücke 1 über die zweite Längsseite 104 des zehnten Transportmittels 100 und die erste Längsseite 123 des zwölften Transportmittels 120 auf das zwölfte Transportmittel 120 übergeben wird. Der zweite Teil der Packstücke 1 wird über die Auslaufseite 111 des elften Transportmittels 110 und die Einlaufseite 121 des zwölften Transportmittels 120 auf das zwölfte Transportmittel 120 übergeben. Die Packstücke 1 werden auf dem zwölften Transportmittel 120 mit einer zwölften Transportgeschwindigkeit von circa 20 m/min. transportiert. Das zwölfte Transportmittel 120 ist als Staurollenförderer ausgeführt. Anschließend werden die Packstücke 1 zu einem dreizehnten Transportmittel 130 mit einer Einlaufseite 131 und einer in Transportrichtung dahinter angeordneten Auslaufseite 132 übergeben und auf dem dreizehnten Transportmittel 130 mit einer dreizehnten Transportgeschwindigkeit von ungefähr 150 m/min. weiter transportiert. Das dreizehnte Transportmittel 130 ist als Gurtförderer ausgeführt.

Durch die Anordnung des achten, neunten und elften Fördermittels 80, 90, 110 als kaskadierte, im Wesentlichen parallel aufgestellte Fördermittel 80, 90, 110, wird den Packstücken 1 die Freiheit gegeben, sich bei seitlichem Drängeln auf das tieferliegenden Fördermittel 90, 110 seitlich herabfallen zu lassen. Die tieferliegenden Fördermittel 90, 110 fördern mit einer steigenden Geschwindigkeit.

An der jeweiligen Auslaufseite 82, 92, 122 der im Wesentlichen parallel angeordneten achten, neunten und zwölften Transportmittel 80, 90, 120 ist ein schräger, feststehender Abweiser 106 montiert. Dabei ist dieser Abweiser zweistückig ausgeführt, wobei ein erstes Stück an der Auslaufseite 82 des achten Transportmittels 80 montiert ist und sich das zweite Stück über das zehnte Transportmittel 100 und das zwölfte Transportmittel 120 erstreckt. Die Winkel γ₁, γ₂ der beiden Stücke des Abweisers 106 zu den Längsachsen der Transportmittel 80, 90, 110, 100, 120 sind dabei unterschiedlich. So beträgt der Winkel γ₁ des Stückes des Abweisers 106, der an dem achten Transportmittel 80 montiert ist, circa 45° zur Längsachse dieses Transportmittels 80, während das zweite über das zehnte und zwölfte Transportmittel 100, 120 reichende Stück des Abweisers 106 einen Winkel γ₂ von 22,5° zu den Längsachsen der Transportmittel 80, 90, 110, 100, 120 bildet. Der Abweiser 106 kann aber auch einstückig ausgeführt sein, so dass er sich über alle drei Auslaufseiten im gleichen Winkel erstreckt. Es ist aber auch möglich, den Abweiser 106 dreistückig auszuführen, wobei er auf dem der Transportmittel 80, 100, 120 einen anderen Winkel γ₁, γ₂, γ₃ zur Längsachse der jeweiligen Transportmittel 80, 100, 120 aufweisen kann. Der Abweiser 106 zwingt die Packstücke 1 in Form einer Seitenführung auf das nächste, parallel und etwas tieferliegende Fördermittel 90, 120 oder 130, wobei diese Fördermittel 90, 120, 130 zudem noch mit einer gegenüber dem vorherigen Fördermittel erhöhten Geschwindigkeit abziehen. Ein weiterer Effekt dieses festen, gleitfreudigen Abweisers 106 ist, dass sich die Packstücke 1 daran üblicherweise vollflächig anschmiegen und somit ausrichten. Dieses Ausrichten und Anschmiegen ist allerdings auch abhängig von Gewicht und Fläche des Packstücks 1 sowie dem Reibwert zwischen Packstück 1 und der Oberfläche des jeweiligen Fördermittels 80, 100, 120. Daher ist das letzte dieser drei kaskadierten Fördermittel 130 als Rollenförderer mit einer sehr engen Rollenteilung ausgeführt.

Das zehnte Fördermittel 100 ist ein Schrägrollenförderer, wobei sind die Rollen schräg angeordnet sind, wodurch der Effekt des schrägen Abweisers 106 verstärkt wird, dass sich einzelne Packstücke 1, die noch nicht durch die geneigte Anordnung des achten und neunten Transportmittels 80, 90 auf das nachfolgende elfte Transportmittel 110 gerutscht sind, in Förderrichtung nach rechts auf das folgende zwölfte Transportmittel 120 übergeben. Zusätzlich richten sich die Packstücke 1 an der linksseitigen Seitenführung aus. In diesem Bereich der Vorrichtung wird der zwischenzeitlich in den vorhergehenden Bereichen vom dreidimensionalen zum zweidimensionalen Packstückstrom umgewandelten Packstückstrom in einen eindimensionalen Packstückstrom gewandelt. Die von dem achten, neunten und elften Transportmittel 80, 90, 110 auf das zwölfte Transportmittel 120 transportierten Packstücke 1 liegen zum Teil hier noch nebeneinander. An der Seitenführung des zwölften Transportmittels 120 richten sich die in Förderrichtung gesehen vorn liegende Packstücke 1 aus. Liegen Packstücke 1 noch parallel, so werden durch die Seitenführung die Packstücke 1 parallel nach in Förderrichtung gesehen rechts verschoben. Das zwölfte Fördermittel 120 ist als Staurollenförderer ausgeführt, auf dem die Packstücke 1 zu einem zweidimensionalen Packstückstrom aufgestaut werden. Ist der Staurollenförderer 120 als Schrägrollenförderer ausgestaltet, wird der durch den schrägen Abweiser 106 hervorgerufene Effekt, dass die Packstücke 1 auf das nachfolgende dreizehnte Transportmittel 130 übergeben werden, verstärkt. Das rechte der beiden parallel liegenden Packstücke 1 wird nun zuerst auf das deutlich schneller laufende dreizehnte Transportmittel 130 abgeschoben. Die Oberfläche des als Gurtförderer ausgeführten dreizehnten Transportmittels 130 ist besonders griffig ausgeführt, so dass eine hohe Reibung zwischen Packstücken 1 und der Transportmitteloberfläche auftritt. Von dem Gurtband des dreizehnten Transportmittels 130 erfasste Packstücke 1 werden weggezerrt, so dass auf dem dreizehnten Transportmittel 130 praktisch keine Packstücke 1 mehr nebeneinander liegen und der Packstückstrom eindimensional ist.

Die Packstücke 1 werden von dem dreizehnten Transportmittel 130 zu einem vierzehnten Transportmittel 140 mit einer Einlaufseite 141 und einer in Transportrichtung dahinter angeordneten Auslaufseite 142 übergeben, wobei das vierzehnte Transportmittel 140 ein einen Kreisbogen von ungefähr 90° beschreibender Kurvengurtförderer ist. Die Packstücke 1 werden auf dem vierzehnten Transportmittel 140 mit einer vierzehnten Transportgeschwindigkeit transportiert, wobei die vierzehnte Transportgeschwindigkeit nochmals gegenüber der dreizehnten Transportgeschwindigkeit auf ungefähr 160 m/min. erhöht ist. Die hohe Kurvengeschwindigkeit führt dabei dazu, dass rotationssymmetrische Packstücke 1 wie beispielsweise Rollen durch die Zentrifugalkraft an die Außenseite des Transportmittels 140 rollen und am Auslauf der Kurve einem Behälter 160 zugeführt werden können. Am Außenradius dieses Fördermittels 140 ist dafür eine glattflächige Seitenführung vorgesehen. Die Breite des vierzehnten Transportmittels 140 ist kleiner als die des nachfolgenden fünfzehnten Transportmittels 150, das sich an dem Innenradius des vierzehnten Transportmittels 140 ausgerichtet anschließt. Auf diese Art können nicht sortierfähige rotationssymmetrische Packstücke 1 aussortiert und gesammelt werden.

Mindestens eine Teilmenge der Packstücke 1, die nicht an der Auslaufseite 142 des vierzehnten Transportmittels 140 aussortiert wurde, wird zu einem fünfzehnten Transportmittel 150 mit einer Einlaufseite 151 und einer in Transportrichtung dahinter angeordneten Auslaufseite 152 übergeben und darauf weiter transportiert. Bei dem fünfzehnten Transportmittel 150 handelt es sich um einen Schrägrollenförderer. Auf diesem auch Ausrichtförderer genannten Transportmittel werden die nun hintereinander geförderten Packstücke 1 einseitig ausgerichtet.

An der Auslaufseite des letzten, fünfzehnten Transportmittels 150 liegt damit ein eindimensionaler Packstückstrom vor, von dem die Packstücke 1 einseitig ausgerichtet weiter verarbeitet, beispielsweise sortiert, werden können.

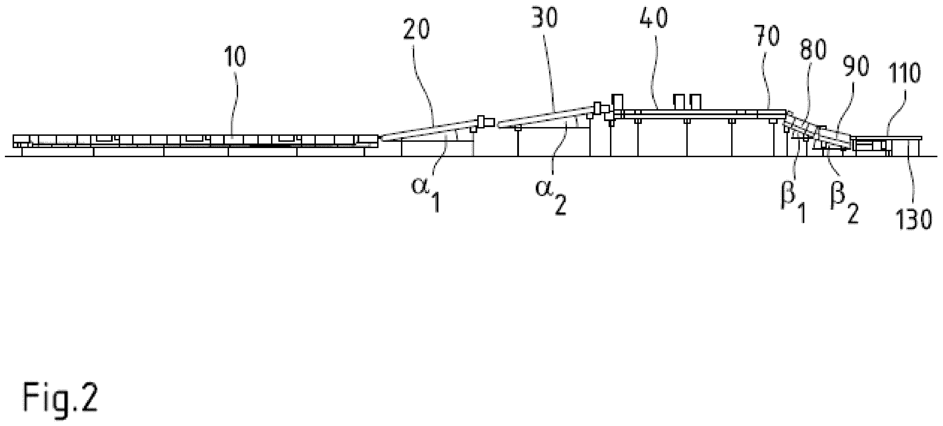

Fig. 2 zeigt eine Seitenansicht der erfindungsgemäßen Vorrichtung aus Fig. 1. Erkennbar ist die Anordnung der zweiten und dritten Transportmittel 20, 30 als steigend verlaufende Gurtförderer. Dabei sind die Steigungswinkel α₁ und α₂ gleich und betragen circa 9°. Die Steigungswinkel α₁ und α₂ können aber auch unterschiedliche Werte annehmen. Weiterhin ist die kaskadierende Anordnung der zweiten, dritten und vierten Transportmittel 20, 30, 40 zu erkennen, wobei die jeweiligen Einlaufseiten 31, 41 der dritten und vierten Transportmittel 30, 40 jeweils um circa 20 mm unterhalb der Auslaufseiten 22, 32 der zweiten und dritten Transportmittel 20, 30 befinden. Weiterhin ist die zu ihrer Längsachse geneigte Anordnung der achten und neunten Transportmittel 80, 90 zu erkennen, wobei das achte Transportmittel 80 um einen Neigungswinkel β₁ von 22,5° und das neunte Transportmittel um einen Neigungswinkel β₂ von 11° zu den Längsachsen der jeweiligen Transportmittel 80, 90 geneigt sind.

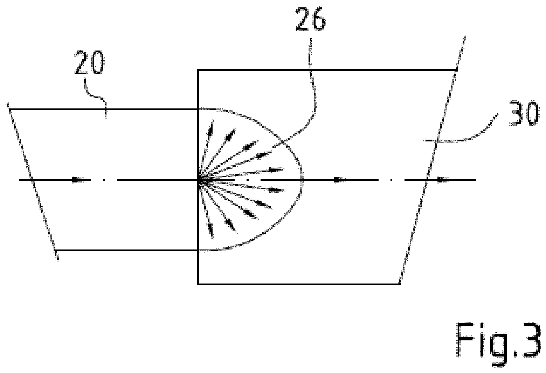

Fig. 3 zeigt eine Draufsicht auf eine erfindungsgemäße Kugelrutsche. Die in vertikaler Richtung höher angeordneten Auslaufseite 22 des zweiten und/oder dritten Transportmittels 20 weist eine Kugelrutsche 26 auf, wobei die Kugelrutsche 26 eine Viertelkugelform aufweist und sich der oberste Punkt der Kugelrutschenoberfläche auf gleicher oder niedrigerer Höhe befindet wie die Auflaufseite 22 und sich der Fuß der Kugelrutsche 26 in Breitenrichtung ungefähr gleich erstreckt wie die Breite der Auslaufseite 22, wobei die Einlaufseite 31 des folgenden Transportmittels 30 breiter ist als die Kugelrutsche 26. Mit einer solchen Kugelrutsche 26 lässt sich der Höhenunterschied zwischen der Auslaufseite 22 des einen und der Einlaufseite 31 des folgenden Transportmittels 30 für die Packstücke 1 besonders schonend überwinden, wobei der Effekt, dass in Höherichtung aufgestapelte Packstücke 1 bei der Übergabe von dem einen zu dem nachfolgenden Transportmittel kippen, erhalten bleibt. Die Kugelrutsche 26 kann aus einem metallischen Werkstoff, Kunststoff, Holz oder einem Gemisch aus mehreren dieser Werkstoffe hergestellt werden. Sie weist eine glatte Oberfläche auf. Alternativ kann sie auch eine raue Oberfläche mit hohem Reibungskoeffizienten zu den Packstücken 1 aufweisen, wodurch der beschriebene Kippeffekt von übereinander gestapelten Packstücken 1, die über die Kugelrutsche 26 rutschen, noch verstärkt wird.

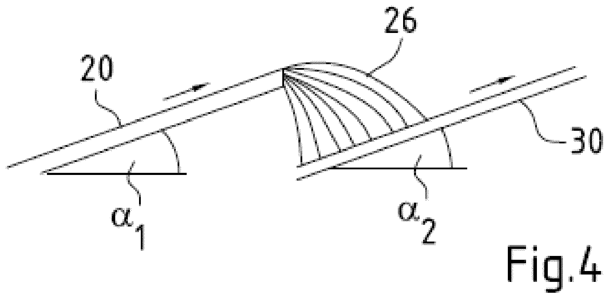

Fig. 4 ist eine Seitenansicht einer erfindungsgemäßen Kugelrutsche 26. In dieser Ansicht sind die beiden Neigungswinkel α₁ und α₂ des zweiten und dritten Transportmittels 20, 30 zu erkennen.

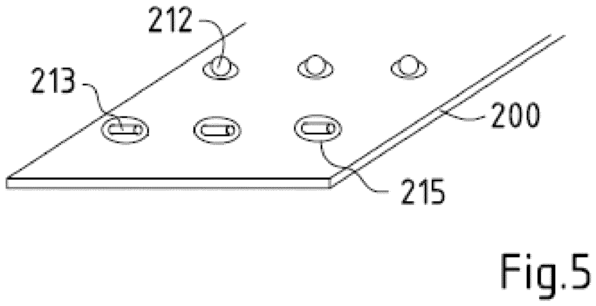

Fig. 5 ist eine Draufsicht auf einen erfindungsgemäßen Fördergurt 200 mit eingelassenen Relativfördermitteln 212, 213. Zumindest einer der Gurtförderer 20, 30, 80, 90, 110, 130 kann einen endlosen Fördergurt 200 aufweisen, der an der Auslaufseite 22, 32, 82, 92, 112, 132 des jeweiligen Gurtförderers 20, 30, 80, 90, 110, 130 um ungefähr 180° umgelenkt und auf der Unterseite des jeweiligen Gurtförderers 20, 30, 80, 90, 110, 130 zurück zur Einlaufseite 21, 31, 81, 91, 111, 131 des jeweiligen Gurtförderers 20, 30, 80, 90, 110, 130 läuft, wo er erneut um ungefähr 180° umgelenkt wird, so dass er auf der Oberseite des jeweiligen Gurtförderers 20, 30, 80, 90, 110, 130 wieder in Richtung der Auslaufseite 22, 32, 82, 92, 112, 132 läuft, wobei in den Fördergurt 200 mindestens ein Relativfördermittel 212, 213 eingelassen ist, wobei das Relativfördermittel 212, 213 einen in einer Lagerung 215 um sich selbst drehbar gelagerten Rotationskörper 212, 213 aufweist und dieser Rotationskörper 212, 213 während des Laufens des Fördergurtes 200 auf der Unterseite des Gurtförderers 20, 30, 80, 90, 110, 130 in Rotation versetzt wird. Dabei kann die Lagerung 215 so ausgestaltet sein, dass der Rotationskörper 212, 213 nur in eine Richtung, bevorzugt in Förderrichtung, rotieren kann, wodurch ein ungewolltes Verlangsamen des Packstückstroms verhindert werden kann. Der Rotationskörper 212, 213 kann während des Laufens des Fördergurtes 200 auf der Unterseite des Gurtförderers 20, 30, 80, 90, 110, 130 durch Reibung an einer in Relation zu der Bewegung des Fördergurts 200 feststehenden Fläche in Rotation versetzt werden. Dies stellt eine besonders einfache und effektive Methode dar, das Rotationsmittel 212, 213 ohne einen eigenen Antrieb vorzusehen in Rotation zu versetzen. Dabei kann der Rotationskörper 212 eine Kugel sein. Alternativ dazu kann der Rotationskörper 213 auch eine Rolle sein.

Die hier gezeigten Ausführungsformen stellen nur Beispiele für die vorliegende Erfindung dar und dürfen daher nicht einschränkend verstanden werden. Alternative durch den Fachmann in Erwägung gezogene Ausführungsformen sind gleichermaßen vom Schutzbereich der vorliegenden Erfindung umfasst, insofern diese Ausführungsformen im Schutzbereich der mitkommenden Ansprüche fallen.

### Bezugszeichenliste:

- 1: Packstück
- 10: erstes Transportmittel
- 11: Einlaufseite des ersten Transportmittels
- 12: Auslaufseite des ersten Transportmittels
- 20: zweites Transportmittel
- 21: Einlaufseite des zweiten Transportmittels
- 22: Auslaufseite des zweiten Transportmittels
- 26: Kugelrutsche
- 30: drittes Transportmittel
- 31: Einlaufseite des dritten Transportmittels
- 32: Auslaufseite des dritten Transportmittels
- 40: viertes Transportmittel
- 41: Einlaufseite des vierten Transportmittels
- 42: Auslaufseite des vierten Transportmittels
- 50: fünftes Transportmittel
- 51: Einlaufseite des fünften Transportmittels
- 52: Auslaufseite des fünften Transportmittels
- 60: sechstes Transportmittel
- 61: Einlaufseite des sechsten Transportmittels
- 62: Auslaufseite des sechsten Transportmittels
- 70: siebtes Transportmittel
- 71: Einlaufseite des siebten Transportmittels
- 72: Auslaufseite des siebten Transportmittels
- 80: achtes Transportmittel
- 81: Einlaufseite des achten Transportmittels
- 82: Auslaufseite des achten Transportmittels
- 83: erste Längsseite des achten Transportmittels
- 84: zweite Längsseite des achten Transportmittels
- 85: Abweiser
- 86: Abweiser
- 90: neuntes Transportmittel
- 91: Einlaufseite des neunten Transportmittels
- 92: Auslaufseite des neunten Transportmittels
- 93: erste Längsseite des neunten Transportmittels
- 94: zweite Längsseite des neunten Transportmittels
- 100: zehntes Transportmittel
- 101: Einlaufseite des elften Transportmittels
- 102: Auslaufseite des elften Transportmittels
- 104: zweite Längsseite des zehnten Transportmittels
- 106: Abweiser
- 110: elftes Transportmittel
- 111: Einlaufseite des elften Transportmittels
- 112: Auslaufseite des elften Transportmittels
- 113: erste Längsseite des elften Transportmittels
- 114: zweite Längsseite des elften Transportmittels
- 120: zwölftes Transportmittel
- 121: Einlaufseite des zwölften Transportmittels
- 122: Auslaufseite des zwölften Transportmittels
- 123: erste Längsseite des zwölften Transportmittels
- 124: zweite Längsseite des zwölften Transportmittels
- 126: Abweiser
- 130: dreizehntes Transportmittel
- 131: Einlaufseite des dreizehnten Transportmittels
- 132: Auslaufseite des dreizehnten Transportmittels
- 140: vierzehntes Transportmittel
- 141: Einlaufseite des vierzehnten Transportmittels
- 142: Auslaufseite des vierzehnten Transportmittels
- 150: fünfzehntes Transportmittel
- 151: Einlaufseite des fünfzehnten Transportmittels
- 152: Auslaufseite des fünfzehnten Transportmittels
- 160: Behälter
- 200: Fördergurt
- 212: Kugel
- 213: Rolle
- 215: Lagerung
- α₁: erster Steigungswinkel
- α₂: zweiter Steigungswinkel
- β₁: erster Neigungswinkel
- β₂: zweiter Neigungswinkel
- γ₁, γ₂, γ₃: Winkel

## Patentansprüche

1. Verfahren zur Vereinzelung von Packstücken (1), wobei die Packstücke (1) zunächst als Bulk vorliegen, wobei
die Packstücke (1) in Form eines Packstückstroms auf mindestens zwei unterschiedlichen Transportmitteln (10, 20, 30, 40, 50, 60, 70, 80, 90, 100, 110, 120, 130, 140, 150) mit unterschiedlichen Transportgeschwindigkeiten transportiert werden, **dadurch gekennzeichnet, dass** die Transportrichtung mindestens einmal um circa 45° umgelenkt wird.

2. Verfahren gemäß Anspruch 1,
**dadurch gekennzeichnet,**
**dass** die Packstücke (1) während des Transports auf den mindestens zwei unterschiedlichen Transportmitteln (10, 20, 30, 40, 50, 60, 70, 80, 90, 100, 110, 120, 130, 140, 150) in unterschiedlichen Höhen transportiert werden.

3. Verfahren gemäß Anspruch 1 oder 2,
**dadurch gekennzeichnet,**
**dass** der Packstückstrom in der mindestens einen Umlenkung in mehrere Packstückströme aufgeteilt wird.

4. Verfahren gemäß Anspruch 3,
**dadurch gekennzeichnet,**
**dass** die mehreren Packstückströme mit unterschiedlichen Transportgeschwindigkeiten transportiert werden.

5. Verfahren gemäß Anspruch 3 oder 4,
**dadurch gekennzeichnet,**
**dass** die mehreren Packstückströme während des Transports auf den mindestens zwei unterschiedlichen Transportmitteln (10, 20, 30, 40, 50, 60, 70, 80, 90, 100, 110, 120, 130, 140, 150) wieder zu einem einzelnen Packstückstrom vereint werden.

6. Verfahren nach einem der vorhergehenden Ansprüche,
**gekennzeichnet durch die Schritte,**
- horizontaler Transport der Packstücke (1) mittels eines ersten Transportmittels (10) mit einer ersten Transportgeschwindigkeit, wobei das erste Transportmittel (10) eine Startseite (11) und eine in Transportrichtung dahinter angeordnete Auslaufseite (12) aufweist;
- Übergabe der Packstücke (1) zu einem zweiten Transportmittel (20) mit einer Einlaufseite (21) und einer in Transportrichtung dahinter angeordneten Auslaufseite (22), wobei die Einlaufseite (21) des zweiten Transportmittels (20) tiefer angeordnet ist als die Auslaufseite (12) des ersten Transportmittels (10) und wobei das zweite Transportmittel (20) mit einem ersten Steigungswinkel (α₁) in Transportrichtung steigend ausgeführt ist;
- Transport der Packstücke (1) auf dem zweiten Transportmittel (20) mit einer zweiten Transportgeschwindigkeit, wobei die zweite Transportgeschwindigkeit größer ist als die erste Transportgeschwind ig keit;
- Übergabe der Packstücke (1) zu einem dritten Transportmittel (30) mit einer Einlaufseite (31) und einer in Transportrichtung dahinter angeordneten Auslaufseite (32), wobei die Einlaufseite (31) des dritten Transportmittels (30) tiefer angeordnet ist als die Auslaufseite (22) des zweiten Transportmittels (20) und wobei das dritte Transportmittel (30) mit einem zweiten Steigungswinkel (α₂) in Transportrichtung steigend ausgeführt ist;
- Transport der Packstücke (1) auf dem dritten Transportmittel (30) mit einer dritten Transportgeschwindigkeit, wobei die dritte Transportgeschwindigkeit größer ist als die zweite Transportgeschwind ig keit;
- Übergabe der Packstücke (1) zu einem vierten Transportmittel (40) mit einer Einlaufseite (41) und einer in Transportrichtung dahinter angeordneten Auslaufseite (42), wobei die Einlaufseite (41) des vierten Transportmittels (40) tiefer angeordnet ist als die Auslaufseite (32) des dritten Transportmittels (30);
- Transport der Packstücke (1) auf dem vierten Transportmittel (40) mit einer vierten Transportgeschwindigkeit, wobei die vierte Transportgeschwindigkeit größer ist als die dritte Transportgeschwind ig keit;
- Übergabe einer ersten Teilmenge der Packstücke (1) zu einem fünften Transportmittel (50) mit einer Einlaufseite (51) und einer in Transportrichtung dahinter angeordneten Auslaufseite (52) und Übergabe einer zweiten Teilmenge der Packstücke (1) zu einem im Wesentlichen parallel zum fünften Transportmittel (50) angeordnetem siebten Transportmittel (70) mit einer Einlaufseite (71) und einer in Transportrichtung dahinter angeordneten Auslaufseite (72), wobei die Einlaufseiten (51, 71) des fünften und siebten Transportmittels (50, 70) in einem Winkel von ungefähr 45° zur Auslaufseite (42) des vierten Transportmittels (40) angeordnet sind;
- Transport der ersten Teilmenge der Packstücke (1) auf dem fünften Transportmittel (50) mit einer fünften Transportgeschwindigkeit, wobei die fünfte Transportgeschwindigkeit größer ist als die vierte Transportgeschwindigkeit, sowie Transport der zweiten Teilmenge der Packstücke (1) auf dem siebten Transportmittel (70) mit einer siebten Transportgeschwindigkeit, wobei die siebte Transportgeschwindigkeit größer ist als die vierte Transportgeschwindigkeit;
- Übergabe der ersten Teilmenge der Packstücke (1) zu einem sechsten Transportmittel (60) mit einer Einlaufseite (61) und einer in Transportrichtung dahinter angeordneten Auslaufseite (62);
- Transport der ersten Teilmenge der Packstücke (1) auf dem sechsten Transportmittel (60) mit einer sechsten Transportgeschwindigkeit, wobei die sechste Transportgeschwindigkeit größer ist als die fünfte Transportgeschwindigkeit,
- Übergabe der ersten und zweiten Teilmenge der Packstücke (1) über eine an die Auslaufseiten (61, 71) der sechsten und siebten Transportmittel (60, 70) angrenzende erste Längsseite (83) eines achten Transportmittels (80) auf ein achtes Transportmittel (80) mit einer Einlaufseite (81), einer in Transportrichtung dahinter angeordneten Auslaufseite (82) und einer zweiten Längsseite (84), wobei die zweite Längsseite (84) im Wesentlichen parallel zur ersten Längsseite (83) angeordnet ist und die Längsseiten (83, 84) in einem Winkel von ungefähr 45° zu den Auslaufseiten (62, 72) der sechsten und siebten Transportmittel (60, 70) angeordnet sind und wobei das achte Transportmittel (80) um einen Neigungswinkel β₁ um seine Längsachse so geneigt ist, dass seine erste Längsseite (83) höher liegt als seine zweite Längsseite (84);
- Transport der Packstücke (1) auf dem achten Transportmittel (80) mit einer achten Transportgeschwindigkeit, wobei die achte Transportgeschwindigkeit niedriger ist als die sechste und siebte Transportgeschwind ig keit;
- Übergabe der Packstücke (1) über die zweite Längsseite (84) des achten Transportmittels (80) auf ein neuntes Transportmittel (90), das über eine Einlaufseite (91), eine Auslaufseite (92) und eine erste Längsseite (93) und eine zweite Längsseite (94) verfügt, wobei die Übergabe der Packstücke (1) auf das neunte Transportmittel (90) über die erste Längsseite (93) des neunten Transportmittels erfolgt und wobei das neunte Transportmittel um einen Neigungswinkel β₂ um seine Längsachse so geneigt ist, dass seine erste Längsseite (93) höher liegt als seine zweite Längsseite (94);
- Transport der Packstücke (1) auf dem neunten Transportmittel (90) mit einer neunten Transportgeschwindigkeit, wobei die neunte Transportgeschwindigkeit höher ist als die achte Transportgeschwind ig keit;
- Übergabe eines ersten Teils der Packstücke (1) zu einem zehnten Transportmittel (100) mit einer Einlaufseite (101) und einer in Transportrichtung dahinter angeordneten Auslaufseite (102), und Übergabe des verbleibenden zweiten Teils der Packstücke (1) zu einem im Wesentlichen parallel zum neunten Transportmittel (90) angeordnetem elften Transportmittel (110) mit einer Einlaufseite (111) und einer in Transportrichtung dahinter angeordneten Auslaufseite (112) sowie einer dem neunten Transportmittel (90) zugewandten ersten Längsseite (113) und einer der ersten Längsseite (113) gegenüberliegenden zweiten Längsseite (114), wobei das zehnte und das elfte Transportmittel (100, 110) im Wesentlichen horizontal angeordnet sind und sich die Auslaufseite (92) des neunten Transportmittels in einer höheren oder gleichhohen Position befindet wie die Einlaufseite (101) des zehnten Transportmittel (110) und die zweite Längsseite (94) des neunten Transportmittels (90) sich auf einer höheren oder gleichhohen Position befindet wie die erste Längsseite (113) des elften Transportmittels (110), und wobei die Übergabe des verbleibenden zweiten Teils der Packstücke (1) von dem neunten Transportmittel (90) auf das elfte Transportmittel (110) über die zweite Längsseite (94) des neunten Transportmittels (90) und die erste Längsseite (111) des elften Transportmittels (110) erfolgt;
- Transport des ersten Teils der Packstücke (1) auf dem zehnten Transportmittel (100) mit einer zehnten Transportgeschwindigkeit, wobei die zehnte Transportgeschwindigkeit größer ist als die neunte Transportgeschwindigkeit und Transport des verbleibenden zweiten Teils der Packstücke (1) auf dem elften Transportmittel (110) mit einer elften Transportgeschwindigkeit , wobei die elfte Transportgeschwindigkeit größer ist als die neunte und als die zehnte Transportgeschwindigkeit;
- Übergabe einer ersten Teilmenge des ersten Teils der Packstücke (1) zu dem elften Transportmittel (110), wobei die Übergabe von der zweiten Längsseite (94) des neunten Transportmittels (90) auf die erste Längsseite (113) des elften Transportmittels (110) erfolgt, und Übergabe der verbleibenden Teilmenge des ersten Teils der Packstücke (1) auf ein zwölftes Transportmittel (120) mit einer Einlaufseite (121) und einer in Transportrichtung dahinter angeordneten Auslaufseite (122) sowie einer an die zweite Längsseite (104) des zehnten Transportmittels (100) angrenzenden ersten Längsseite (123) und einer der ersten Längsseite (123) gegenüberliegenden zweiten Längsseite (124), wobei die verbleibende Teilmenge des ersten Teils der Packstücke (1) über die zweite Längsseite (104) des zehnten Transportmittels (100) und die erste Längsseite (123) des zwölften Transportmittels (120) auf das zwölfte Transportmittel (120) übergeben wird, und Übergabe des zweiten Teils der Packstücke (1) über die Auslaufseite (112) des elften Transportmittels (110) und die Einlaufseite (121) des zwölften Transportmittels (120) auf das zwölfte Transportmittel (120);
- Transport der Packstücke (1) auf dem zwölften Transportmittel (120) mit einer zwölften Transportgeschwindigkeit, wobei die zwölfte Transportgeschwindigkeit kleiner ist als die zehnte und die elfte Transportgeschwind ig keit;
- Übergabe der Packstücke (1) zu einem dreizehnten Transportmittel (130) mit einer Einlaufseite (131) und einer in Transportrichtung dahinter angeordneten Auslaufseite (132);
- Transport der Packstücke (1) auf dem dreizehnten Transportmittel (130) mit einer dreizehnten Transportgeschwindigkeit, wobei die dreizehnte Transportgeschwindigkeit größer ist als die zwölfte Transportgeschwind ig keit;
- Übergabe der Packstücke (1) zu einem vierzehnten Transportmittel (140) mit einer Einlaufseite (141) und einer in Transportrichtung dahinter angeordneten Auslaufseite (142), wobei das vierzehnte Transportmittel (140) einen Kreisbogen von ungefähr 90° beschreibt;
- Transport der Packstücke (1) auf dem vierzehnten Transportmittel (140) mit einer vierzehnten Transportgeschwindigkeit, wobei die vierzehnte Transportgeschwindigkeit größer ist als die dreizehnte Transportgeschwind ig keit;
- Übergabe mindestens einer Teilmenge der Packstücke (1) zu einem fünfzehnten Transportmittel (150) mit einer Einlaufseite (151) und einer in Transportrichtung dahinter angeordneten Auslaufseite (152);
- Transport der Packstücke (1) auf dem fünfzehnten Transportmittel (150).

7. Verfahren gemäß Anspruch 6,
**dadurch gekennzeichnet,**
**dass** nur eine Teilmenge der Packstücke (1) von dem vierzehnten Transportmittel (140) an das fünfzehnte Transportmittel (150) übergeben wird, während eine weitere Teilmenge der Packstücke (1) von dem vierzehnten Transportmittel (140) einem Behälter zugeführt wird.

8. Verfahren nach Anspruch 6 oder 7,
**dadurch gekennzeichnet,**
**dass** die erste Transportgeschwindigkeit ungefähr 1,5 m/min beträgt, während die zweite Transportgeschwindigkeit ungefähr 4 m/min, die dritte Transportgeschwindigkeit ungefähr 7 m/min., die vierte Transportgeschwindigkeit ungefähr 32 m/min., die fünfte Transportgeschwindigkeit ungefähr 40 m/min., die sechste Transportgeschwindigkeit ungefähr 50 m/min., die siebte Transportgeschwindigkeit ungefähr 70 m/min., die achte Transportgeschwindigkeit ungefähr 32 m/min., die neunte Transportgeschwindigkeit ungefähr 50 m/min., die zehnte Transportgeschwindigkeit ungefähr 60 m/min., die elfte Transportgeschwindigkeit ungefähr 100 m/min., die zwölfte Transportgeschwindigkeit ungefähr 50 m/min., die dreizehnte Transportgeschwindigkeit ungefähr 150 m/min., die vierzehnte Transportgeschwindigkeit ungefähr 160 m/min. beträgt.

9. Vorrichtung zur Vereinzelung von Packstücken (1), wobei die Packstücke (1) zunächst als Bulk vorliegen, enthaltend eine Mehrzahl von Transportmitteln (10, 20, 30, 40, 50, 60, 70, 80, 90, 100, 110, 120, 130, 140, 150), wobei die Transportmittel (10, 20, 30, 40, 50, 60, 70, 80, 90, 100, 110, 120, 130, 140, 150) in einer Transportmittelfolge angeordnet sind, wobei ein erster und ein letzter Teil der Transportmittel (10, 20, 30, 40, 80, 100, 120, 130, 140, 150) hintereinander angeordnet sind, während ein weiterer Teil der Transportmittel (50, 60, 70, 90, 110), der zwischen dem ersten und dem letzten Teil der Transportmittel (10, 20, 30, 40, 80, 100, 120, 130, 140, 150) angeordnet ist, zumindest teilweise parallel zueinander angeordnet ist, wobei zumindest eines der Transportmittel (20, 30) des ersten Teils der Transportmittel (10, 20, 30, 40) in vertikaler Richtung steigend angeordnet ist und ein in Transportrichtung gesehener dem ersten Teil nachfolgender weiterer Teil der Transportmittel (80, 90) in vertikaler Richtung gesehen fallend angeordnet ist und wobei die Auslaufseite (22, 32) zumindest eines Transportmittels (20, 30) des ersten Teils der Transportmittel (10, 20, 30, 40) in vertikaler Richtung höher angeordnet ist als die Einlaufseite (31, 41) des in Transportrichtung gesehenen folgenden Transportmittels (30, 40), **dadurch gekennzeichnet, dass** zumindest die Einlaufseite (21, 31, 41, 51, 61, 71, 81, 91, 101, 111, 121, 131, 141, 151) eines einem Transportmittel (10, 20, 30, 40, 50, 60, 70, 80, 90, 100, 110, 120, 130, 140) folgenden Transportmittels (20, 30, 40, 50, 60, 70, 80, 90, 100, 110, 120, 130, 140, 150) mit der Auslaufseite (12, 22, 32, 42, 52, 62, 72, 82, 92, 102, 112, 122, 132, 142) des vorhergehenden Transportmittels (10, 20, 30, 40, 50, 60, 70, 80, 90, 100, 110, 120, 130, 140) einen Winkel von circa 45° bildet.

10. Vorrichtung gemäß Anspruch 9,
**dadurch gekennzeichnet,**
**dass** die Transportmittelfolge mindestens zwei Umlenkungen um jeweils ungefähr 90° enthält.

11. Vorrichtung gemäß Anspruch 10,
**dadurch gekennzeichnet,**
**dass** sich unter den Transportmitteln (10, 20, 30, 40, 50, 60, 70, 80, 90, 100, 110, 120, 130, 140, 150) Gurtförderer, Schrägrollenförderer, Streifenförderer und Staurollenförderer befinden.

12. Vorrichtung gemäß Anspruch 11,
**dadurch gekennzeichnet,**
**dass** die Transportmittel (40, 50, 60, 70) in der ersten Umlenkung Streifenförderer enthalten.

13. Vorrichtung nach Anspruch 11 oder 12,
**dadurch gekennzeichnet,**
**dass** mindestens ein Transportmittel (140) in der zweiten Umlenkung ein Kurvengurtförderer ist.

14. Vorrichtung nach einem der Ansprüche 9-13,
**dadurch gekennzeichnet,**
**dass** mindestens ein auf die erste Umlenkung folgendes achtes Transportmittel (80) eine erste (83) und eine zweite Längsseite (84) aufweist, wobei die zweite Längsseite (84) im Wesentlichen parallel zur ersten Längsseite (83) angeordnet ist und die Längsseiten (83, 84) in einem Winkel von ungefähr 45° zu den Auslaufseiten (62, 72) der sechsten und siebten Transportmittel (60, 70) angeordnet sind und wobei das achte Transportmittel (80) um einen Neigungswinkel β₁ um seine Längsachse so geneigt ist, dass seine erste Längsseite (83) höher liegt als seine zweite Längsseite (84).

15. Vorrichtung nach einem der Ansprüche 9-14,
**dadurch gekennzeichnet,**
**dass** ein neuntes Transportmittel (90) eine erste (93) und eine zweite Längsseite (94) aufweist, wobei die zweite Längsseite (94) im Wesentlichen parallel zur ersten Längsseite (93) angeordnet ist und die Längsseiten (93, 94) im Wesentlichen parallel zu den Längsseiten (83, 84) eines achten Transportmittels (80) angeordnet sind und wobei das neunte Transportmittel (90) um einen Neigungswinkel β₂ um seine Längsachse so geneigt ist, dass seine erste Längsseite (93) höher liegt als seine zweite Längsseite (94) und wobei die erste Längsseite (93) des neunten Transportmittels (90) nicht höher liegt als die zweite Längsseite (84) des achten Transportmittels (80).

16. Vorrichtung nach einem oder mehreren der Ansprüche 14-15,
**dadurch gekennzeichnet,**
**dass** das achte Transportmittel (80) mindestens einen Abweiser (85) aufweist, der in einer im Wesentlichen um 45° gegenüber der Längsrichtung des achten Transportmittels (80) geneigten Richtung in einer solchen Höhe über dem achten Transportmittel (80) fixiert ist, dass die Bewegung des Transportmittels nicht behindert ist, während auf dem Transportmittel transportierte Packstücke von dem Abweiser (85) aus der von dem Transportmittel (80) vorgegebenen Transportrichtung abgelenkt werden.

17. Vorrichtung nach einem oder mehreren der Ansprüche 14-16,
**dadurch gekennzeichnet,**
**dass** mindestens das achte (80), ein zehntes (100) und ein zwölftes (120) Transportmittel an ihrer jeweiligen Auslaufseite (82, 102, 122) Abweiser (86, 106, 126) aufweisen, die in einem Winkel γ zwischen 10° und 80°, vorzugsweise zwischen 15° und 50° zur Längsachse des jeweiligen Fördermittels (80, 100, 120) fixiert sind und das jeweilige Fördermittel (80, 100, 120) für darauf transportierte Packstücke abschließen.

18. Vorrichtung nach einem oder mehreren der Ansprüche 11-17, wobei die Gurtförderer (20, 30, 80, 90,110, 130,140) einen endlosen Fördergurt (200) aufweisen, der an der Auslaufseite (22, 32, 82, 92, 112, 132, 142) des jeweiligen Gurtförderers (20, 30, 80, 90,110, 130,140) um ungefähr 180° umgelenkt und auf der Unterseite des jeweiligen Gurtförderers (20, 30, 80, 90,110, 130,140) zurück zur Einlaufseite (21, 31, 81, 91, 111, 131, 141) des jeweiligen Gurtförderers (20, 30, 80, 90,110, 130,140) läuft, wo er erneut um ungefähr 180° umgelenkt wird, so dass er auf der Oberseite des jeweiligen Gurtförderers (20, 30, 80, 90,110, 130,140) wieder in Richtung der Auslaufseite (22, 32, 82, 92, 112, 132, 142) läuft,
**dadurch gekennzeichnet,**
**dass** in den Fördergurt (200) mindestens eines Gurtförderers (20, 30, 80, 90,110, 130,140) mindestens ein Relativfördermittel (212, 213) eingelassen ist, wobei das Relativfördermittel (212, 213) einen in einer Lagerung (215) um sich selbst drehbar gelagerten Rotationskörper (212, 213) aufweist und dieser Rotationskörper (212, 213) während des Laufens des Fördergurtes (200) auf der Unterseite des Gurtförderers (20, 30, 80, 90,110, 130,140) in Rotation versetzt wird.

19. Vorrichtung nach Anspruch 18,
**dadurch gekennzeichnet,,**
**dass** der Rotationskörper (211) während des Laufens des Fördergurtes (200) auf der Unterseite des Gurtförderers (20, 30, 80, 90,110, 130,140) durch Reibung an einer in Relation zu der Bewegung des Fördergurts (200) feststehenden Fläche in Rotation versetzt wird.

20. Vorrichtung nach Anspruch 17 oder 18,
**dadurch gekennzeichnet,**
**dass** der Rotationskörper (211) eine Kugel (212) ist.

21. Vorrichtung nach Anspruch 17 oder 18,
**dadurch gekennzeichnet,**
**dass** der Rotationskörper (211) eine Rolle (213) ist.

22. Vorrichtung nach einem oder mehreren der Ansprüche 9 bis 21,
**dadurch gekennzeichnet,**
**dass** zumindest eine der in vertikaler Richtung höher angeordneten Auslaufseiten (22, 32) eine Kugelrutsche (26) aufweist, wobei die Kugelrutsche (26) eine Viertelkugelform aufweist und sich der oberste Punkt der Kugelrutschenoberfläche (26) auf gleicher oder niedrigerer Höhe befindet wie die Auflaufseite (22, 32) und sich der Fuß der Kugelrutsche (26) in Breitenrichtung ungefähr gleich erstreckt wie die Breite der Auslaufseite (22, 32), wobei die Einlaufseite (31, 41) des folgenden Transportmittels (30, 40) breiter ist als die Kugelrutsche (26).

## Claims

1. A method for the singulation of parcels (1), whereby the parcels (1) are initially present as a bulk flow, whereby the parcels (1) are transported in the form of a package flow on at least two different transport means (10, 20, 30, 40, 50, 60, 70, 80, 90, 100, 110, 120, 130, 140, 150) at different transport speeds,
**characterized in that**
the transport direction is deflected at least once by approximately 45°.

2. The method according to claim 1,
**characterized in that,**
during the transport on the at least two different transport means (10, 20, 30, 40, 50, 60, 70, 80, 90, 100, 110, 120, 130, 140, 150), the packages (1) are transported at different heights.

3. The method according to claim 1 or 2,
**characterized in that**
the package flow is divided into several package flows in the at least one deflection.

4. The method according to claim 3,
**characterized in that**
the multiple package flows are transported at different transport speeds.

5. The method according to claim 3 or 4,
**characterized in that,**
during the transport on the at least two different transport means (10, 20, 30, 40, 50, 60, 70, 80, 90, 100, 110, 120, 130, 140, 150), the multiple package flows are once again merged into a single package flow.

6. The method according to one of the preceding claims,
**characterized by the steps**
• the packages (1) are transported horizontally by a first transport means (10) at a first transport speed, whereby the first transport means (10) has a starting side (11) and an outlet side (12) arranged downstream from it in the transport direction;
• the packages (1) are transferred to a second transport means (20) that has an inlet side (21) and an outlet side (22) arranged downstream from it in the transport direction, whereby the inlet side (21) of the second transport means (20) is arranged so as to be at a lower level than the outlet side (12) of the first transport means (10), and whereby the second transport means (20) is configured so as to rise at a first angle of ascent (α₁) in the transport direction;
• the packages (1) are transported on the second transport means (20) at a second transport speed, whereby the second transport speed is greater than the first transport speed;
• the packages (1) are transferred to a third transport means (30) that has an inlet side (31) and an outlet side (32) arranged downstream from it in the transport direction, whereby the inlet side (31) of the third transport means (30) is once again arranged so as to be at a lower level than the outlet side (22) of the second transport means (20), and whereby the third transport means (30) is configured so as to rise at a second angle of ascent (α₂) in the transport direction;
• the packages (1) are transported on the third transport means (30) at a third transport speed, whereby the third transport speed is greater than the second transport speed;
• the packages (1) are transferred to a fourth transport means (40) that has an inlet side (41) and an outlet side (42) arranged downstream from it in the transport direction, whereby the inlet side (41) of the fourth transport means (40) is arranged so as to be at a lower level than the outlet side (32) of the third transport means (30);
• the packages (1) are transported on the fourth transport means (40) at a fourth transport speed, whereby the fourth transport speed is greater than the third transport speed;
• a first portion of the packages (1) is transferred to a fifth transport means (50) that has an inlet side (51) and an outlet side (52) arranged downstream from it in the transport direction, and a second portion of the packages (1) is transferred to a seventh transport means (70) that has an inlet side (71) and an outlet side (72) arranged downstream from it in the transport direction and that is arranged essentially parallel to the fifth transport means (50), whereby the inlet sides (51, 71) of the fifth and seventh transport means (50, 70) are arranged at an angle of approximately 45° relative to the outlet side (42) of the fourth transport means (40);
• the first portion of the packages (1) is transported on the fifth transport means (50) at a fifth transport speed, whereby the fifth transport speed is greater than the fourth transport speed, and the second portion of the packages (1) is transported on the seventh transport means (70) at a seventh transport speed, whereby the seventh transport speed is greater than the fourth transport speed;
• the first portion of the packages (1) is transferred to a sixth transport means (60) that has an inlet side (61) and an outlet side (62) arranged downstream from it in the transport direction;
• the first portion of the packages (1) is transported on the sixth transport means (60) at a sixth transport speed, whereby the sixth transport speed is greater than the fifth transport speed;
• via a first lengthwise side (83) of an eighth transport means (80) that is adjacent to the outlet sides (61, 71) of the sixth and seventh transport means (60, 70), the first and second portions of the packages (1) are transferred to an eighth transport means (80) that has an inlet side (81), an outlet side (82) arranged downstream from it in the transport direction, and a second lengthwise side (84), whereby the second lengthwise side (84) is arranged essentially parallel to the first lengthwise side (83), and the lengthwise sides (83, 84) are arranged at an angle of approximately 45° relative to the outlet sides (62, 72) of the sixth and seventh transport means (60, 70), and whereby the eighth transport means (80) is slanted around its longitudinal axis by an angle of inclination β₁ in such a way that its first lengthwise side (83) is at a higher level than its second lengthwise side (84);
• the packages (1) are transported on the eighth transport means (80) at an eighth transport speed, whereby the eighth transport speed is lower than the sixth and seventh transport speeds;
• the packages (1) are transferred via the second lengthwise side (84) of the eighth transport means (80) to a ninth transport means (90) that has an inlet side (91), an outlet side (92) as well as a first lengthwise side (93) and a second lengthwise side (94), whereby the packages (1) are transferred to the ninth transport means (90) via the first lengthwise side (93) of the ninth transport means (90), and whereby the ninth transport means (90) is slanted around its longitudinal axis by an angle of inclination β₂ in such a way that its first lengthwise side (93) is at a higher level than its second lengthwise side (94);
• the packages (1) are transported on the ninth transport means (90) at a ninth transport speed, whereby the ninth transport speed is higher than the eighth transport speed;
• a first batch of packages (1) is transferred to a tenth transport means (100) that has an inlet side (101) and an outlet side (102) arranged downstream from it in the transport direction, and the remaining second batch of packages (1) is transferred to an eleventh transport means (110) that has an inlet side (111) and an outlet side (112) arranged downstream from it in the transport direction and that is arranged essentially parallel to the ninth transport means (90), as well as a first lengthwise side (113) facing the ninth transport means (90) and a second lengthwise side (114) opposite from the first lengthwise side (113), whereby the tenth and eleventh transport means (100, 110) are arranged essentially horizontally, and the outlet side (92) of the ninth transport means is located a position that is higher than or equal to that of the inlet side (101) of the tenth transport means (100), and the second lengthwise side (94) of the ninth transport means (90) is at a position that is higher than or equal to that of the first lengthwise side (113) of the eleventh transport means (110), and whereby the remaining second batch of packages (1) is transferred from the ninth transport means (90) to the eleventh transport means (110) via the second lengthwise side (94) of the ninth transport means (90) and via the first lengthwise side (113) of the eleventh transport means (111);
• the first batch of packages (1) is transported on the tenth transport means (100) at a tenth transport speed, whereby the tenth transport speed is greater than the ninth transport speed, and the remaining second batch of packages (1) is transported on the eleventh transport means (110) at an eleventh transport speed, whereby the eleventh transport speed is greater than the ninth transport speed and the tenth transport speed;
• a first portion of the first batch of packages (1) is transferred to the eleventh transport means (110), whereby it is transferred from the second lengthwise side (94) of the ninth transport means (90) to the first lengthwise side (113) of the eleventh transport means (110), and the remaining portion of the first batch of packages (1) is transferred to a twelfth transport means (120) that has an inlet side (121) and an outlet side (122) arranged downstream from it in the transport direction, as well as a first lengthwise side (123) adjacent to the second lengthwise side (104) of the tenth transport means (100) and a second lengthwise side (124) opposite from the first lengthwise side (123), whereby the remaining portion of the first batch of packages (1) is transferred to the twelfth transport means (120) via the second lengthwise side (104) of the tenth transport means (100) and via the first lengthwise side (123) of the twelfth transport means (120), and the second batch of packages (1) is transferred to the twelfth transport means (120) via the outlet side (112) of the eleventh transport means (110) and via the inlet side (121) of the twelfth transport means (120);
• the packages (1) are transported on the twelfth transport means (120) at a twelfth transport speed, whereby the twelfth transport speed is smaller than the tenth and eleventh transport speeds;
• the packages (1) are transferred to a thirteenth transport means (130) that has an inlet side (131) and an outlet side (132) arranged downstream from it in the transport direction;
• the packages (1) are transported on the thirteenth transport means (130) at a thirteenth transport speed, whereby the thirteenth transport speed is greater than the twelfth transport speed;
• the packages (1) are transferred to a fourteenth transport means (140) that has an inlet side (141) and an outlet side (142) arranged downstream from it in the transport direction, whereby the fourteenth transport means (140) describes an arc of approximately 90°;
• the packages (1) are transported on the fourteenth transport means (140) at a fourteenth transport speed, whereby the fourteenth transport speed is greater than the thirteenth transport speed;
• at least a portion of the packages (1) is transferred to a fifteenth transport means (150) that has an inlet side (151) and an outlet side (152) arranged downstream from it in the transport direction;
• the packages (1) are transported on the fifteenth transport means (150).

7. The method according to claim 6,
**characterized in that**
only a portion of the packages (1) is transferred from the fourteenth transport means (140) to the fifteenth transport means (150), whereas another portion of the packages (1) is fed into a container by the fourteenth transport means (140).

8. The method according to claim 6 or 7,
**characterized in that**
the first transport speed is approximately 1.5 m/m, whereas
the second transport speed is approximately 4 m/min,
the third transport speed is approximately 7 m/min,
the fourth transport speed is approximately 32 m/min,
the fifth transport speed is approximately 40 m/min,
the sixth transport speed is approximately 50 m/min,
the seventh transport speed is approximately 70 m/min,
the eighth transport speed is approximately 32 m/min,
the ninth transport speed is approximately 50 m/min,
the tenth transport speed is approximately 60 m/min,
the eleventh transport speed is approximately 100 m/min,
the twelfth transport speed is approximately 50 m/min,
the thirteenth transport speed is approximately 150 m/min,
the fourteenth transport speed is approximately 160 m/min.

9. A device for the singulation of packages (1), whereby the packages (1) are initially present as a bulk flow, comprising a plurality of transport means (10, 20, 30, 40, 50, 60, 70, 80, 90, 100, 110, 120, 130, 140, 150), whereby the transport means (10, 20, 30, 40, 50, 60, 70, 80, 90, 100, 110, 120, 130, 140, 150) are arranged in a transport means sequence, whereby a first and a last part of the transport means (10, 20, 30, 40, 80, 100, 120, 130, 140, 150) are arranged one behind the other, while another part of the transport means (50, 60, 70, 90, 110) that is arranged between the first and the last part of the (10, 20, 30, 40, 80, 100, 120, 130, 140, 150) is arranged at least partially in parallel to each other, whereby at least one of the transport means (20, 30) of the first part of the transport means (10, 20, 30, 40) is arranged so as to rise in the vertical direction, and another part of the transport means (80, 90) subsequent to the first part - as seen in the transport direction - is arranged so as to drop in the vertical direction, and whereby the outlet side (22, 32) of at least one transport means (20, 30) of the first part of the transport means (10, 20, 30, 40) is arranged higher in the vertical direction than the inlet side (31, 41) of the subsequent transport means (30, 40) - as seen in the transport direction,
**characterized in that,**
at least the inlet side (21, 31, 41, 51, 61, 71, 81, 91, 101, 111, 121, 131, 141, 151) of a transport means (20, 30, 40, 50, 60, 70, 80, 90, 100, 110, 120, 130, 140) that is subsequent to a transport means (20, 30, 40, 50, 60, 70, 80, 90, 100, 110, 120, 130, 140, 150) forms an angle of approximately 45° with the outlet side (12, 22, 32, 42, 52, 62, 72, 82, 92, 102, 112, 122, 132, 142) of the preceding transport means (10, 20, 30, 40, 50, 60, 70, 80, 90, 100, 110, 120, 130, 140).

10. The device according to claim 9,
**characterized in that**
the transport means sequence has at least two deflections of approximately 90° each.

11. The device according to claim 10,
**characterized in that**
the transport means (10, 20, 30, 40, 50, 60, 70, 80, 90, 100, 110, 120, 130, 140, 150) include belt conveyors, inclined roller conveyor, strip conveyors and accumulating roller conveyors.

12. The device according to claim 11,
**characterized in that**
the transport means (40, 50, 60, 70) in the first deflection comprise strip conveyors.

13. The device according to claim 11 or 12,
**characterized in that**
at least one transport means (140) in the second deflection is a curved belt conveyor.

14. The device according to one of claims 9 to 13,
**characterized in that**
at least the eight transport means (80) that follows the first deflection has a first lengthwise side (83) and a second lengthwise side (84), whereby the second lengthwise side (84) is arranged essentially parallel to the first lengthwise side (83), and the lengthwise sides (83, 84) are arranged at an angle of approximately 45° relative to the outlet sides (62, 72) of the sixth and seventh transport means (60, 70), and whereby the eighth transport means (80) is slanted around its longitudinal axis by an angle of inclination β₁, in such a way that its first lengthwise side (83) is at a higher level than its second lengthwise side (84).

15. The device according to one of claims 9 to 14,
**characterized in that**
a ninth transport means (90) has a first lengthwise side (93) and a second lengthwise side (94), whereby the second lengthwise side (94) is arranged essentially parallel to the first lengthwise side (93), and the lengthwise sides (93, 94) are arranged essentially parallel to the lengthwise sides (83, 84) of an eighth transport means (80), and whereby the ninth transport means is slanted around its longitudinal axis by an angle of inclination β₂ in such a way that its first lengthwise side (93) is at a higher level than its second lengthwise side (94), and whereby the first lengthwise side (93) of the ninth transport means (90) is not at a higher level than the second lengthwise side (84) of the eighth transport means (80).

16. The device according to one or more of claims 14 to 15,
**characterized in that**
the eighth transport means (80) has at least one deflector (85) that is affixed in a direction slanted essentially by 45° relative to the lengthwise direction of the eighth transport means (80) at such a height above the eighth transport means (80) that the movement of the transport means is not hindered while packages being transported on the transport means are deflected by the deflector (85) out of the transport direction prescribed by the transport means (80).

17. The device according to one or more of claims 14 to 16,
**characterized in that**
at least the eighth transport means (80), the tenth transport means (100) and the twelfth transport means (120) - at their respective outlet sides (82, 102, 122) - have deflectors (86, 106, 126) that are affixed at an angle γ between 10° and 80°, preferably between 15° and 50°, relative to the longitudinal axis of the appertaining conveying means (80, 100, 120), and said deflectors (86, 106, 126) close off the appertaining conveying means (80, 100, 120) for the packages being transported on them.

18. The device according to one or more of the preceding claims 11 to 17, whereby the belt conveyors (20, 30, 80, 90, 110, 130, 140) have a continuous conveyor belt (200) that is deflected by approximately 180° at the outlet side (22, 32, 82, 92, 112, 132, 142) of the appertaining belt conveyor (20, 30, 80, 90, 110, 130, 140) and that runs on the underside of the appertaining belt conveyor (20, 30, 80, 90, 110, 130, 140) back to the inlet side (21, 31, 81, 91, 111, 131, 141) of the appertaining belt conveyor (20, 30, 80, 90, 110, 130, 140), where it is once again deflected by approximately 180°, so that the conveyor belt (200) runs on the top of the appertaining belt conveyor (20, 30, 80, 90, 110, 130, 140), once again in the direction of the outlet side (22, 32, 82, 92, 112, 132, 142),
**characterized in that**
at least one relative conveying means (212, 213) is recessed in the conveyor belt (200) of at least one belt conveyor (20, 30, 80, 90, 110, 130, 140), whereby the relative conveying means (212, 213) has a rotating body (212, 213) that is mounted in a bearing (215) so that it can rotate around itself and this rotating body (212, 213) is made to rotate while the conveyor belt (200) is running on the underside of the belt conveyor (20, 30, 80, 90, 110, 130, 140).

19. The device according to claim 18,
**characterized in that**
while the conveyor belt (200) is running on the underside of the belt conveyor (20, 30, 80, 90, 110, 130, 140), the rotating body (211) is made to rotate due to friction against a surface that is stationary relative to the movement of the conveyor belt (200).

20. The device according to claim 17 or 18,
**characterized in that**
the rotating body (211) is a ball (212).

21. The device according to claim 17 or 18,
**characterized in that**
the rotating body (211) is a roller (213).

22. The device according to one or more of claims 9 to 21,
**characterized in that**
at least one of the outlet sides (22, 32) arranged higher in the vertical direction has a ball caster chute (26), whereby the ball caster chute (26) has a quarter-spherical shape and the uppermost point of the surface of the ball caster chute (26) is at the same height as or at a lower height than the outlet side (22, 32), and the foot of the ball caster chute (26) extends in the widthwise direction approximately to the same extent as the width of the outlet side (22, 32), whereby the inlet side (31, 41) of the next transport means (30, 40) is wider than the ball caster chute (26).

## Revendications

1. Procédé de séparation de paquets (1), les paquets (1) étant tout d'abord en vrac, les paquets (1) étant transportés sous la forme d'un flux de paquets sur au moins deux moyens de transport différents (10, 20, 30, 40, 50, 60, 70, 80, 90, 100, 110, 120, 130, 140, 150) avec des vitesses de transport différentes, **caractérisé en ce que** la direction du transport est déviée au moins une fois d'environ 45°.

2. Procédé selon la revendication 1, **caractérisé en ce que** les paquets (1) sont transportés à des hauteurs différentes pendant le transport sur les au moins deux moyens de transport différents (10, 20, 30, 40, 50, 60, 70, 80, 90, 100, 110, 120, 130, 140, 150).

3. Procédé selon la revendication 1 ou 2, **caractérisé en ce que** le flux de paquets est réparti en plusieurs flux de paquents dans l'au moins une déviation.

4. Procédé selon la revendication 3, **caractérisé en ce que** les plusieurs flux de paquets sont transportés à des vitesses de transport différentes.

5. Procédé selon la revendication 3 ou 4, **caractérisé en ce que** les plusieurs flux de paquets sont regroupés en un seul flux de paquets pendant le transport sur les au moins deux moyens de transport différents (10, 20, 30, 40, 50, 60, 70, 80, 90, 100, 110, 120, 130, 140, 150).

6. Procédé selon l'une des revendications précédentes, **caractérisé par** les étapes suivantes :
- transport horizontal des paquets (1) au moyen d'un premier moyen de transport (10) à une première vitesse de transport, le premier moyen de transport (10) présentant un côté de départ (11) et un côté de sortie (12) situé derrière dans la direction du transport ;
- transfert des paquets (1) vers un deuxième moyen de transport (20) avec un côté d'entrée (21) et un côté de sortie (22) situé derrière dans la direction du transport, le côté d'entrée (21) du deuxième moyen de transport (20) étant situé plus bas que le côté de sortie (12) du premier moyen de transport (10) et le deuxième moyen de transport (20) étant réalisé montant avec un premier angle d'inclinaison (α1) dans la direction du transport ;
- transport des paquets (1) sur le deuxième moyen de transport (20) avec une deuxième vitesse de transport, la deuxième vitesse de transport étant supérieure à la première vitesse de transport ;
- transfert des paquets (1) vers un troisième moyen de transport (30) avec un côté d'entrée (31) et un côté de sortie (32) situé derrière dans la direction du transport, le côté d'entrée (31) du troisième moyen de transport (30) étant situé plus bas que le côté de sortie (22) du deuxième moyen de transport (20) et le troisième moyen de transport (30) étant réalisé montant avec un deuxième angle d'inclinaison (α2) dans la direction du transport ;
- transport des paquets (1) sur le troisième moyen de transport (30) à une troisième vitesse de transport, la troisième vitesse de transport étant supérieure à la deuxième vitesse de transport ;
- transfert des paquets (1) vers un quatrième moyen de transport (40) avec un côté d'entrée (41) et un côté de sortie (42) situé derrière dans la direction du transport, le côté d'entrée (41) du quatrième moyen de transport (40) étant situé plus bas que le côté de sortie (32) du troisième moyen de transport (30) ;
- transport des paquets (1) sur le quatrième moyen de transport (40) à une quatrième vitesse de transport, la quatrième vitesse de transport étant supérieure à la troisième vitesse de transport ;
- transfert d'une première quantité partielle de paquets (1) vers un cinquième moyen de transport (50) avec un côté d'entrée (51) et un côté de sortie (52) situé derrière dans la direction du transport et transfert d'une deuxième quantité partielle de paquets (1) vers un septième moyen de transport (70), sensiblement parallèle au cinquième moyen de transport (50), avec un côté d'entrée (71) et un côté de sortie (72) situé derrière dans la direction du transport, le côté d'entrée (51, 71) des cinquième et septième moyens de transport (50, 70) étant agencés avec un angle d'environ 45° avec le côté de sortie (42) du quatrième moyen de transport (40) ;
- transport de la première quantité partielle de paquets (1) sur le cinquième moyen de transport (50) à une cinquième vitesse de transport, la cinquième vitesse de transport étant supérieure à la quatrième vitesse de transport, et transport de la deuxième quantité partielle de paquets (1) sur le septième moyen de transport (70) à une septième vitesse de transport, la septième vitesse de transport étant supérieure à la quatrième vitesse de transport ;
- transfert de la première quantité partielle de paquets (1) vers un sixième moyen de transport (60) avec un côté d'entrée (61) et un côté de sortie (62) situé derrière dans la direction du transport ;
- transport de la première quantité partielle der paquets (1) sur le sixième moyen de transport (60) à une sixième vitesse de transport, la sixième vitesse de transport étant supérieure à la cinquième vitesse de transport ;
- transfert des première et deuxième quantités partielles de paquets (1) via un premier côté long (83) d'un huitième moyen de transport (80) adjacent aux côtés de sortie (61, 71) des sixième et septième moyen de transport (60, 70) vers un huitième moyen de transport (80) avec un côté d'entrée (81), un côté de sortie (82) situé derrière dans la direction du transport et un deuxième côté long (84), le deuxième côté long (84) étant sensiblement parallèle au premier côté long (83) et les côtés longs (83, 84) formant un angle d'environ 45° avec les côtés de sortie (62, 72) des sixième et septième moyens de transport (60, 70) et le huitième moyen de transport (80) étant incliné d'un angle d'inclinaison β1 par rapport à son axe longitudinal de telle sorte que son premier côté long (83) est situé plus haut que son deuxième côté long (84) ;
- transport des paquets (1) sur le huitième moyen de transport (80) à une huitième vitesse de transport, la huitième vitesse de transport étant inférieure aux sixième et septième vitesses de transport ;
- transfert des paquets (1) via le deuxième côté long (84) du huitième moyen de transport (80) vers un neuvième moyen de transport (90) qui dispose d'un côté d'entrée (91), d'un côté de sortie (92) et d'un premier côté long (93) et d'un deuxième côté long (94), le transfert des paquets (1) vers le neuvième moyen de transport (90) s'effectuant via le premier côté long (93) du neuvième moyen de transport et le
neuvième moyen de transport étant incliné d'un angle d'inclinaison β2 par rapport à son axe longitudinal de telle sorte que son premier côté long (93) est situé plus haut que son deuxième côté long (94) ;
- transport des paquets (1) sur le neuvième moyen de transport (90) à une neuvième vitesse de transport, la neuvième vitesse de transport étant supérieure à la huitième vitesse de transport;
- transfert d'une première partie des paquets (1) vers un dixième moyen de transport (100) avec un côté d'entrée (101) et un côté de sortie (102) situé derrière dans la direction du transport, et transfert de la deuxième partie restante des paquets (1) vers un onzième moyen de transport (110) sensiblement parallèle au neuvième moyen de transport (90), avec un côté d'entrée (111) et un côté de sortie (112) situé derrière dans la direction du transport ainsi qu'un premier côté long (113) tourné vers le neuvième moyen de transport (90) et un deuxième côté long (114) en regard du premier côté long (113), les dixième et onzième moyens de transport (100, 110) étant agencés sensiblement horizontalement et le côté de sortie (92) du neuvième moyen de transport se trouvant dans une position plus élevée ou à la même hauteur que le côté d'entrée (101) du dixième moyen de transport (110) et le deuxième côté long (94) du neuvième moyen de transport (90) se trouvant à une position plus élevée ou à la même hauteur que le premier côté long (113) du onzième moyen de transport (110), et le transfert de la deuxième partie restante des paquets (1) du neuvième moyen de transport (90) vers le onzième moyen de transport (110) s'effectuant via le deuxième côté long (94) du neuvième moyen de transport (90) et le premier côté long (111) du onzième moyen de transport (110) ;
- transport de la première partie des paquets (1) sur le dixième moyen de transport (100) à une dixième vitesse de transport, la dixième vitesse de transport étant supérieure à la neuvième vitesse de transport, et transport de la deuxième partie restante des paquets (1) sur le onzième moyen de transport (110) à une onzième vitesse de transport, la onzième vitesse de transport étant supérieure aux neuvième et dixième vitesses de transport ;
- transfert d'une première quantité partielle de paquets (1) vers le onzième moyen de transport (110), le transfert s'effectuant du deuxième côté long (94) du neuvième moyen de transport (90) vers le premier côté long (113) du onzième moyen de transport (110), et transfert de la quantité partielle restante de la première partie des paquets (1) vers un douzième moyen de transport (120) avec un côté d'entrée (121) et un côté de sortie (122) situé derrière dans la direction du transport ainsi qu'un premier côté long (123) adjacent au deuxième côté long (104) du dixième moyen de transport (100) en regard du deuxième côté long (124), la quantité partielle restante de la première partie des paquets (1) étant transférée au douzième moyen de transport (120) via le deuxième côté long (104) du dixième moyen de transport (100) et le premier côté long (123) du douzième moyen de transport (120), et transfert de la deuxième partie des paquets (1) au douzième moyen de transport (120) via le côté de sortie (112) du onzième moyen de transport (110) et le côté d'entrée (121) du douzième moyen de transport (120) ;
- transport des paquets (1) sur le douzième moyen de transport (120) à une douzième vitesse de transport, la douzième vitesse de transport étant inférieure aux dixième et onzième vitesse de transport ;
- transfert des paquets (1) vers un treizième moyen de transport (130) avec un côté d'entrée (131) et un côté de sortie (132) situé derrière dans la direction du transport ;
- transport des paquets (1) sur le treizième moyen de transport (130) à une treizième vitesse de transport, la treizième vitesse de transport étant supérieure à la douzième vitesse de transport ;
- transfert des paquets (1) vers un quatorzième moyen de transport (140) avec un côté d'entrée (141) et un côté de sortie (142) situé derrière dans la direction du transport, le quatorzième moyens de transport (140) décrivant un arc de cercle d'environ 90° ;
- transport des paquets (1) sur le quatorzième moyen de transport (140) à une quatorzième vitesse de transport, la quatorzième vitesse de transport étant supérieure à la treizième vitesse de transport ;
- transfert d'au moins une quantité partielle des paquets (1) vers un quinzième moyen de transport (150) avec un côté d'entrée (151) et un côté de sortie (152) situé derrière dans la direction du transport ;
- transport des paquets (1) sur le quinzième moyen de transport (150).

7. Procédé selon la revendication 6, **caractérisé en ce que** seulement une quantité partielle des paquets (1) est transférée du quatorzième moyen de transport (140) au quinzième moyen de transport (150), tandis qu'une autre quantité partielle des paquets (1) est amenée du quatorzième moyen de transport (140) à un récipient.

8. Procédé selon la revendication 6 ou 7, **caractérisé en ce que** la première vitesse de transport est d'environ 1,5 m/min, tandis que la deuxième vitesse de transport est d'environ 4 m/min, la troisième vitesse de transport, d'environ 7 m/min, la quatrième vitesse de transport, d'environ 32 m/min, la cinquième vitesse de transport, d'environ 40 m/min, la sixième vitesse de transport, d'environ 50 m/min, la septième vitesse de transport, d'environ 70 m/min., la huitième vitesse de transport, d'environ 32 m/min, la neuvième vitesse de transport, d'environ 50 m/min, la dixième vitesse de transport, d'environ 60 m/min, la onzième vitesse de transport, d'environ 100 m/min, la douzième vitesse de transport, d'environ 50 m/min, la treizième vitesse de transport, d'environ 150 m/min, la quatorzième vitesse de transport, d'environ 160 m/min.

9. Dispositif de séparation de paquets (1), les paquets (1) étant tout d'abord en vrac, comprenant une pluralité de moyens de transport (10, 20, 30, 40, 50, 60, 70, 80, 90, 100, 110, 120, 130, 140, 150), les moyens de transport (10, 20, 30, 40, 50, 60, 70, 80, 90, 100, 110, 120, 130, 140, 150) étant agencés en une suite de moyens de transport, une première et une dernière partie des moyens de transport (10, 20, 30, 40, 80, 100, 120, 130, 140, 150) étant agencés l'une à la suite de l'autre, tandis qu'une autre partie des moyens de transport (50, 60, 70, 90, 110) située entre les première et dernière parties des moyens de transport (10, 20, 30, 40, 80, 100, 120, 130, 140, 150) est agencée au moins en partie parallèlement, au moins l'un des moyens de transport (20, 30) de la première partie des moyens de transport (10, 20, 30, 40) étant agencé montant verticalement et une autre partie des moyens de transport (80, 90) en aval de la première partie si on la considère dans la direction du transport étant agencée descendante verticalement et le côté de sortie (22, 32) d'au moins un moyen de transport (20, 30) de la première partie des moyens de transport (10, 20, 30, 40) étant situé plus haut, en direction verticale, que le côté d'entrée (31, 41) du moyen de transport (30, 40) suivant si on le considère dans la direction du transport, **caractérisé en ce qu'**au moins le côté d'entrée (21, 31, 41, 51, 61, 71, 81, 91, 101, 111, 121, 131, 141, 151) d'un moyen de transport (20, 30, 40, 50, 60, 70, 80, 90, 100, 110, 120, 130, 140, 150) faisant suite à un moyen de transport (10, 20, 30, 40, 50, 60, 70, 80, 90, 100, 110, 120, 130, 140) forme un angle d'environ 45° avec le côté de sortie (12, 22, 32, 42, 52, 62, 72, 82, 92, 102, 112, 122, 132, 142) du moyen de transport (10, 20, 30, 40, 50, 60, 70, 80, 90, 100, 110, 120, 130, 140) précédent.

10. Dispositif selon la revendication 9, **caractérisé en ce que** la suite de moyens de transport comporte au moins deux déviations d'environ 90° chacune.

11. Dispositif selon la revendication 10, **caractérisé en ce que** figurent, parmi les moyens de transport (10, 20, 30, 40, 50, 60, 70, 80, 90, 100, 110, 120, 130, 140, 150) des convoyeurs à courroie, des convoyeurs à rouleaux inclinés, convoyeurs à bande et des convoyeurs à rouleaux à accumulation.

12. Dispositif selon la revendication 11, **caractérisé en ce que** les moyens de transport (40, 50, 60, 70) contiennent des convoyeurs à bande dans la première déviation.

13. Dispositif selon la revendication 11 ou 12, **caractérisé en ce qu'**au moins un moyen de transport (140) est, dans la deuxième déviation, un convoyeur à courroie curviligne.

14. Dispositif selon l'une des revendications 9-13, **caractérisé en ce qu'**au moins un huitième moyen de transport (80) faisant suite à la première déviation présente un premier (83) et un deuxième côté long (84), le deuxième côté long (84) étant sensiblement parallèle au premier côté long (83) et les côtés longs (83, 84) formant un angle d'environ 45° avec les côtés de sortie (62, 72) des sixième et septième moyens de transport (60, 70) et le huitième moyen de transport (80) étant incliné d'un angle d'inclinaison β1 par rapport à son axe longitudinal de telle sorte que son premier côté long (83) est situé plus haut que son deuxième côté long (84).

15. Dispositif selon l'une des revendications 9-14, **caractérisé en ce qu'**un neuvième moyen de transport (90) présente un premier (93) et un deuxième côté long (94), le deuxième côté long (94) étant sensiblement parallèle au premier côté long (93) et les côtés longs (93, 94) étant sensiblement parallèles aux côtés longs (83, 84) d'un huitième moyen de transport (80) et le neuvième moyen de transport (90) étant incliné d'un angle d'inclinaison β2 par rapport à son axe longitudinal de telle sorte que son premier côté long (93) est situé plus haut que son deuxième côté long (94) et le premier côté long (93) du neuvième moyen de transport (90) n'étant pas situé plus haut que le deuxième côté long (84) du huitième moyen de transport (80).

16. Dispositif selon l'une ou plusieurs des revendications 14-15, **caractérisé en ce que** le huitième moyen de transport (80) comporte au moins un déflecteur (85) fixé dans une direction inclinée de sensiblement 45° par rapport à la direction longitudinale du huitième moyen de transport (80) à une hauteur telle au-dessus du huitième moyen de transport (80) que le mouvement du moyen de transport n'est pas entravé pendant que des paquets transportés sur le moyen de transport sont déviés par le déflecteur (85) de la direction du transport imposée par le moyen de transport (80).

17. Dispositif selon l'une ou plusieurs des revendications 14-16, **caractérisé en ce qu'**au moins le huitième (80), un dixième (100) et un douzième (120) moyen de transport présentent, sur leur côté de sortie respectif, (82, 102, 122) des déflecteurs (86, 106, 126) qui sont fixés avec un angle Y compris entre 10° et 80°, et de préférence entre 15° et 50°, par rapport à l'axe longitudinal du moyen de transport respectif (80, 100, 120) et qui terminent le moyen de transport respectif (80, 100, 120) pour les paquets transportés dessus.

18. Dispositif selon l'une ou plusieurs des revendications 11-17, le convoyeur à courroie (20, 30, 80, 90,110, 130,140) comportant une courroie de transport sans fin (200) qui est déviée d'environ 180° sur le côté de sortie (22, 32, 82, 92, 112, 132, 142) du convoyeur à courroie respectif (20, 30, 80, 90,110, 130,140) et qui, sur la partie inférieure du convoyeur à courroie respectif (20, 30, 80, 90,110, 130,140), revient vers le côté d'entrée (21, 31, 81, 91, 111, 131, 141) du convoyeur à courroie respectif (20, 30, 80, 90,110, 130,140), où elle est de nouveau déviée d'environ 180°, de sorte que, sur la partie supérieure du convoyeur à courroie respectif (20, 30, 80, 90,110, 130,140), elle revient vers le côté de sortie (22, 32, 82, 92, 112, 132, 142), **caractérisé en ce qu'**au moins un moyen de transport relatif (212, 213) est incorporé à la courroie de transport (200) d'un convoyeur à courroie (20, 30, 80, 90,110, 130,140), le moyen de transport relatif (212, 213) comportant un corps rotatif (212, 213) logé rotatif sur lui-même dans un logement (215) et ce corps rotatif (212, 213) étant mis en rotation lorsque la courroie de transport (200) court sur la partie inférieure du convoyeur à courroie (20, 30, 80, 90,110, 130,140).

19. Dispositif selon la revendication 18, **caractérisé en ce que** le corps rotatif (211) est mis en rotation lorsque la courroie de transport (200) court sur la partie inférieure du convoyeur à courroie (20, 30, 80, 90,110, 130,140) par frottement sur une surface fixe relativement au mouvement de la courroie de transport (200).

20. Dispositif selon la revendication 17 ou 18, **caractérisé en ce que** le corps rotatif (211) est une bille (212).

21. Dispositif selon la revendication 17 ou 18, **caractérisé en ce que** le corps rotatif (211) est un rouleau (213).

22. Dispositif selon l'une ou plusieurs des revendications 9 à 21, **caractérisé en ce qu'**au moins l'un des côtés de sortie (22, 32) situé plus haut dans le sens vertical comporte une glissière à bille (26), la glissière à bille (26) ayant la forme d'un quart de bille et le point supérieur de la surface de la glissière à bille (26) étant à la même hauteur ou à une hauteur inférieure au côté de sortie (22, 32) et la base de la glissière à bille (26) présente dans le sens de la largeur une étendue approximativement égale à la largeur du côté de sortie (22, 32), le côté d'entrée (31, 41) du moyen de transport suivant (30, 40) étant plus large que la glissière à bille (26).
